(19) Europäisches Patentamt
European Patent Office
Office européen des brevets

(11) Veröffentlichungsnummer: **0 023 648**
**B1**

(12) # EUROPÄISCHE PATENTSCHRIFT

(45) Veröffentlichungstag der Patentschrift: **23.06.82**

(51) Int. Cl.³: **C 09 B 1/20**, C 09 B 55/00, C 08 K 5/34

(21) Anmeldenummer: **80104233.4**

(22) Anmeldetag: **18.07.80**

(54) **Anthrachinon-Azomethin-Verbindungen, Verfahren zu ihrer Herstellung; Verfahren zum Färben synthetischer Fasermaterialien sowie zum Pigmentieren organischer makro-molekularer Stoffe.**

(30) Priorität: **04.08.79 DE 2931710**

(43) Veröffentlichungstag der Anmeldung: **11.02.81 Patentblatt 81/6**

(45) Bekanntmachung des Hinweises auf die Patenterteilung: **23.06.82 Patentblatt 82/25**

(84) Benannte Vertragsstaaten: **CH DE FR GB IT LI**

(56) Entgegenhaltungen:
**EP-A-0 008 063**
**DE-A-2 025 429**
**CHEMICAL ABSTRACTS, Band 86, 1977 Seite 73, Nr. 107999k Columbus, Ohio, US**

(73) Patentinhaber: **BAYER AG, Zentralbereich Patente, Marken und Lizenzen, D-5090 Leverkusen 1, Bayerwerk (DE)**

(72) Erfinder: **Neeff, Rütger, Dr., Berta-von-Suttner-Strasse 22, D-5090 Leverkusen (DE)**
Erfinder: **Rolf, Meinhard, Dr., Berta-von Suttner-Strasse 24, D-5090 Leverkusen (DE)**
Erfinder: **Müller, Walter, Pfarrer-Klein-Strasse 3, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Antrachinon-Azomethin-Verbindungen, Verfahren zu ihrer Herstellung, Verfahren zum Färben synthetischer Fasermaterialien
sowie zum Pigmentieren organischer makromolekularer Stoffe

Die Erfindung betrifft Anthrachinon-Azomethin-Verbindungen, die in einer ihrer tautomeren Strukturen der Formel

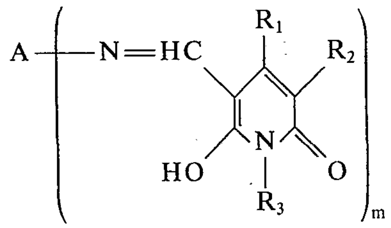

(I)

entsprechen, Verfahren zu ihrer Herstellung sowie ihre Verwendung als Pigmente und Farbstoffe für synthetische Fasermaterialien.

Weitere tautomere Formen der erfindungsgemäßen Verbindungen entsprechen den Formeln

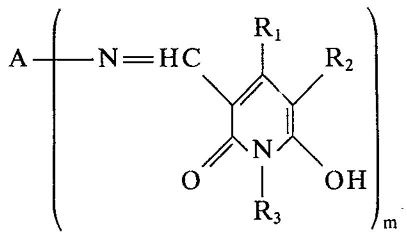

(Ia)

und

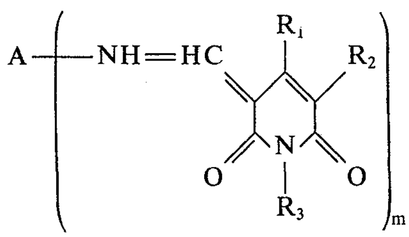

(Ib)

Der Einfachheit halber wird im folgenden jeweils nur die in Formel (I) dargestellte tautomere Form genannt. Es wird aber darauf hingewiesen, daß dieses keine Einschränkung der Erfindung bezüglich eines bestimmten Tautomeren bedeutet.

Aus der DE-A-2 025 429 sind Bis-Azomethinfarbstoffe bekannt, die sich vom Benzol oder von einem aromatischen Rest, der zwei entweder direkt oder über Brückenglieder miteinander verbundene Benzolreste enthält, ableiten.

In der Formel (I) bedeuten

A einen Sulfonsäuregruppen-freien, gegebenenfalls weitersubstituierten Anthrachinonrest, der vorzugsweise aus höchsetns 5 kondensierten Ringen besteht,

$R_1$ Wasserstoff, $C_1-C_4$-Alkyl, Hydroxy-$C_1-C_4$-Alkyl, gegebenenfalls substituiertes Phenyl, Carboxy, Carbonsäure-$C_1-C_4$-alkylester oder Hydroxy,

$R_2$ Wasserstoff, Halogen, Nitro, Cyan, gegebenenfalls substituiertes Carbamoyl oder gegebenenfalls substituiertes Sulfamoyl, Sulfonsäure-$C_1-C_4$-alkylester, Sulfonsäurearylester, $C_1-C_4$-Alkylcarbonyl, $C_1-C_4$-Alkoxycarbonyl, gegebenenfalls substituiertes Benzoyl, Alkyl- oder gegebenenfalls substituiertes Phenylsulfon oder einen heteroaromatischen Rest, z. B. einen Rest der Formel

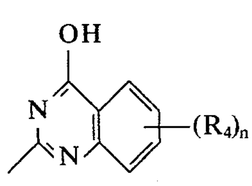

(II)

oder der Formel

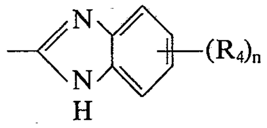

(III)

oder der Formel

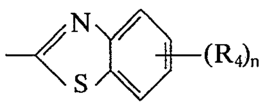

(IV)

$R_3$ gegebenenfalls substituiertes Aryl oder Heteroaryl, Cycloalkyl oder $C_1-C_{12}$-Alkyl, wobei die Alkylkette durch Sauerstoff oder Schwefel unterbrochen und/oder durch Hydroxyl-, $-N(R')_2$- oder $-N(R')_3{}^{\oplus}X^{\ominus}$-Gruppen substituiert sein kann,
$R_4$ einen Substituenten,
R′ Wasserstoff, $C_1-C_4$-Alkyl, Cycloalkyl, gegebenenfalls substituiertes Aryl,
X ein Anion,
m 1, 2, 3 oder 4 und
n 0, 1, 2, 3 oder 4.

Geeignete Substituenten $R_4$ sind beispielsweise Halogen wie Chlor und Brom, $C_1-C_4$-Alkyl, $C_1-C_4$-Alkoxy, Nitro, Trifluormethyl, Cyan, gegebenenfalls substituiertes Carbonamid und Sulfonamid, Acylamino oder Arylamino.

Aryl in Sulfonsäurearylester ($R_2$) und als Bedeutung für $R_3$ und R′ bezeichnet vorzugsweise Phenyl, das durch Halogen wie Chlor und Brom, $C_1-C_4$-Alkyl, $C_1-C_4$-Alkoxy, Nitro, Trifluormethyl, Cyan, gegebenenfalls substituiertes Carbamoyl, gegebenenfalls substituiertes Sulfamoyl, Acylamino und Arylamino, vorzugsweise Phenylamino, substituiert sein kann.

Diese Substituenten kommen auch für Phenyl ($R_1$) sowie Benzoyl ($R_2$) und Benzolsulfonyl ($R_2$) in Betracht.

Als Substituenten der Carbamoyl- und Sulfamoylgruppen kommen $C_1-C_4$-Alkyl, gegebenenfalls durch $C_1-C_4$-Alkyl, $C_1-C_4$-Alkoxy, Fluor, Chlor, Brom oder Nitro substituiertes Phenyl und Benzyl in Frage. Als Acylgruppen sind insbesondere $C_1-C_4$-Alkylcarbonylamino und gegebenenfalls im Benzolkern durch Chlor, $C_1-C_4$-Alkyl, $C_1-C_4$-Alkoxy oder Nitro substituiertes Benzoylamino zu nennen. Arylamino ist insbesondere gegebenenfalls durch $C_1-C_4$-Alkyl, $C_1-C_4$-Alkoxy, Fluor, Chlor, Brom oder Nitro substituiertes Phenylamino.

Geeignete Amino-anthrachinone der Formel

$$A-(NH_2)_m \qquad (V)$$

worin A und m die oben angegebene Bedeutung besitzen, sind:

1-Amino-anthrachinon, 2-Amino-anthrachinon, 1-Amino-2-chloranthrachinon, 1-Amino-4-chloranthrachinon, 1-Amino-5-chloranthrachinon, 1-Amino-6-chloranthrachinon, 1-Amino-6-(7)-chloranthrachinon (Gemisch), 1-Amino-5,8-dichloranthrachinon, 1-Amino-2-bromanthrachinon, 1-Amino-2,4-dibromanthrachinon, 1-Amino-6,7-dichloranthrachinon, 1-Amino-6-fluoranthrachinon, 1-Amino-7-fluoranthrachinon, 1-Amino-6,7-difluoranthrachinon, 2-Amino-1-chloranthrachinon, 2-Amino-3-chloranthrachinon, 2-Amino-3-bromanthrachinon, 1-Amino-4-nitroanthrachinon, 1-Amino-5-nitroanthrachinon, 1-Amino-2-methylanthrachinon, 1-Amino-2-methyl-4-chloranthrachinon, 1-Amino-2-methyl-4-bromanthrachinon, 1-Aminoanthrachinon-2-carbonsäure, 1-Aminoanthrachinon-2-carbonsäureamid, 1-Aminoanthrachinon-2-carbonsäuremethylester, 1-Amino-4-nitroanthrachinon-2-carbonsäure, 1-Amino-2-acetylanthrachinon, 1-Amino-5-benzoylaminoanthrachinon, 1-Amino-4-benzoylaminoanthrachinon, 1-Amino-4-hydroxyanthrachinon, 1-Amino-5-hydroxyanthrachinon, 1-Amino-4-methoxyanthrachinon, 1-Amino-2-methoxy-4-hydroxyanthrachinon, 1-Amino-4-methylaminoanthrachinon, 1-Amino-4-cyclohexylaminoanthrachinon, 1-Amino-4-anilinoanthrachinon, 1-Amino-6-methylmercaptoanthrachinon, 2-Phenyl-6-amino-4,5-phthaloylbenzimidazol, 6-Chlor-2-amino-3,4-phthaloylacridon, 7-Chlor-2-amino-3,4-phthaloylacridon, 5-Chlor-8-amino-3,4-phthaloylacridon, 3-Methyl-6-amino-anthrapyridon, 3-Methyl-7-amino-anthrapyridon, 4-Amino-1,9-pyrazolanthron, 5-Amino-1,9-pyrazolanthron, 4-Amino-1,9-anthrapyrimidin, 5-Amino-1,9-anthrapyrimidin, 1,5-Diaminoanthrachinon,

1,4-Diaminoanthrachinon, 1,8-Diaminoanthrachinon, 2,6-Diaminoanthrachinon, 1,5-Diamino-4-chloranthrachinon, 1,4-Diamino-5-nitroanthrachinon, 1,5-Diamino-2,4,6,8-tetrabromanthrachinon, 1,5-Diamino-4,8-dihydroxyanthrachinon, 1,8-Diamino-4,5-dihydroxyanthrachinon, 4,4'-Diamino-1,1'-dianthrimid, 1-Amino-8-benzoylaminoanthrachinon, 1-Amino-2-brom-4-(4-methylbenzolsulfonylamino)-anthrachinon, 1-Amino-4-(2-chlorbenzoylamino)-anthrachinon, 1-Amino-4-(3-chlorbenzoylamino)-anthrachinon, 1-Amino-4-(4-chlorbenzoylamino)-anthrachinon, 1-Amino-4-(2,5-dichlorbenzoylamino)-anthrachinon, 1-Amino-4-(2,3,4,5-tetrachlorbenzoylamino)-anthrachinon, 1-Amino-4-(3-nitrobenzoylamino)-anthrachinon, 1-Amino-5-(2-chlorbenzoylamino)-anthrachinon, 1-Amino-5-(3-chlorbenzoylamino)-anthrachinon, 1-Amino-5-(4-chlorbenzoylamino)-anthrachinon, 1-Amino-5-(2,5-dichlorbenzoylamino)-anthrachinon, 1-Amino-5-(2,3,4,5-tetrachlorbenzoylamino)-anthrachinon, 1-Amino-5-(3-nitrobenzoylamino)anthrachinon, 1-Amino-8-(2-chlorbenzoylamino)-anthrachinon, 1-Amino-8-(3-chlorbenzoylamino)-anthrachinon, 1-Amino-8-(4-chlorbenzoylamino)-anthrachinon, 1-Amino-8-(2,5-dichlorbenzoylamino)-anthrachinon, 1-Amino-8-(2,3,4,5-tetrachlorbenzoylamino)-anthrachinon und 1-Amino-8-(3-nitrobenzoylamino)-anthrachinon.

Bevorzugte Anthrachinon-Azomethin-Verbindungen entsprechen der Formel

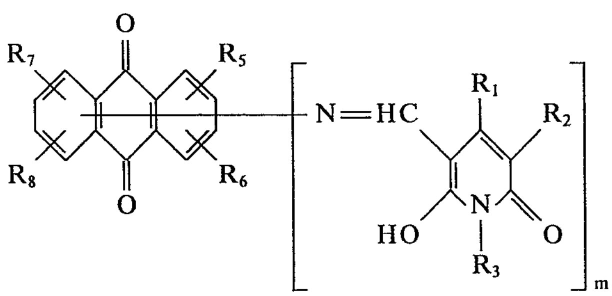

(VI)

worin

$R_1$, $R_2$, $R_3$ und m die oben angegebene Bedeutung haben und

$R_5$ Wasserstoff, Halogen wie Fluor, Chlor und Brom, Nitro, $C_1-C_4$-Alkyl, $C_1-C_4$-Alkoxy, $C_1-C_4$-Alkylamino, Benzylamino, Cyclohexylamino, $C_1-C_4$-Alkylmercapto, gegebenenfalls durch $C_1-C_4$-Alkyl, $C_1-C_4$-Alkoxy, Fluor, Chlor, Brom oder Nitro substituiertes Phenylmercapto, $C_1-C_4$-Alkylcarbonyl, $C_1-C_4$-Alkoxycarbonyl, gegebenenfalls durch $C_1-C_4$-Alkyl, $C_1-C_4$-Alkoxy, Chlor oder Nitro substituiertes Phenylamino, gegebenenfalls durch $C_1-C_4$-Alkyl, Benzyl oder Phenyl mono- oder disubstituiertes Carbamoyl, wobei Phenyl durch $C_1-C_4$-Alkyl, $C_1-C_4$-Alkoxy, Fluor, Chlor, Brom oder Nitro substituiert sein kann, Carboxy, Hydroxy, $C_1-C_4$-Alkylcarbonylamino oder gegebenenfalls durch $C_1-C_4$-Alkyl, $C_1-C_4$-Alkoxy, Chlor, Brom oder Nitro substituiertes Benzoylamino, oder ggf. durch $C_1-C_4$-Alkyl, $C_1-C_4$-Alkoxy, Fluor, Chlor, Brom oder Nitro substituiertes Benzolsulfonylamino,

$R_6$ Wasserstoff, Chlor, Hydroxy oder Methyl,

$R_7$ Wasserstoff, Halogen wie Fluor, Chlor oder Brom, Nitro, $C_1-C_4$-Alkyl, $C_1-C_4$-Alkoxy, $C_1-C_4$-Alkylamino, $C_1-C_4$-Alkylmercapto, gegebenenfalls durch $C_1-C_4$-Alkyl, $C_1-C_4$-Alkoxy, Fluor Chlor, Brom oder Nitro substituiertes Phenylmercapto, $C_1-C_4$-Alkoxycarbonyl, $C_1-C_4$-Alkylcarbonyl, Benzylamino, Cyclohexylamino, gegebenenfalls durch $C_1-C_4$-Alkyl, $C_1-C_4$-Alkoxy, Chlor, Brom oder Nitro substituiertes Phenylamino, Carboxy, Hydroxy, gegebenenfalls durch $C_1-C_4$-Alkyl, Benzyl oder Phenyl mono- oder disubstituiertes Carbamoyl, wobei Phenyl durch $C_1-C_4$-Alkyl, $C_1-C_4$-Alkoxy, Fluor, Chlor, Brom oder Nitro substituiert sein kann, $C_1-C_4$-Alkylcarbonylamino, gegebenenfalls durch $C_1-C_4$-Alkyl, $C_1-C_4$-Alkoxy, Chlor, Brom oder Nitro substituiertes Benzoylamino, $C_1-C_4$-Alkansulfonylamino oder gegebenenfalls durch $C_1-C_4$-Alkyl, $C_1-C_4$-Alkoxy, Fluor, Chlor, Brom oder Nitro substituiertes Benzoylsulfonylamino und

$R_8$ Wasserstoff, Halogen wie Fluor, Chlor und Brom oder Hydroxy bedeuten.

Besonders bevorzugt sind Anthrachinon-Azomethin-Verbindungen der Formel

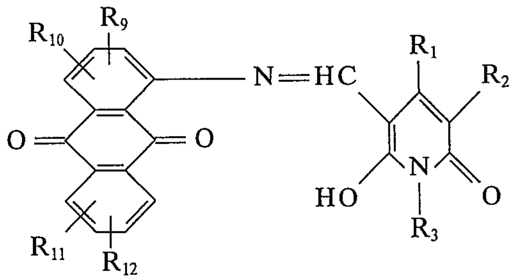

(VII)

worin

$R_1$, $R_2$ und $R_3$ die oben angegebene Bedeutung haben und

$R_9$, $R_{10}$, $R_{11}$ und $R_{12}$ Wasserstoff, Chlor, Brom, Carboxy, $C_1-C_4$-Alkoxycarbonyl, Carbamoyl, $C_1-C_4$-Alkylcarbonylamino, gegebenenfalls durch 1 oder 2 Nitro oder 1 bis 5 Chlor oder Brom substituiertes Benzoylamino, $C_1-C_4$-Alkansulfonylamino oder gegebenenfalls durch Methyl, Methoxy oder Chlor substituiertes Benzoylsulfonylamino oder einen Rest der Formel

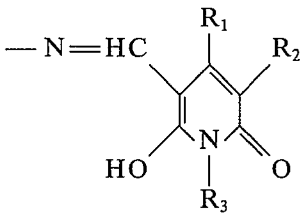

(VIII)

bedeuten.

Die Herstellung der Anthrachinon-Azomethin-Verbindungen (I) aus den Amino-anthrachinonen der Formel

$$A-(NH_2)_m \qquad (V)$$

und den in 1-, 3- und 4-Stellung entsprechend substituierten 6-Hydroxy-2-pyridonen der Formel

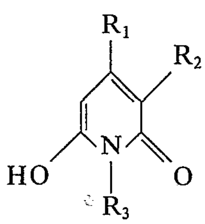

(IX)

in der $R_1$, $R_2$ und $R_3$ die oben angegebene Bedeutung haben, kann nach mehreren Verfahren erfolgen.

(1) Man kondensiert die in 1-, 3- und 4-Stellung entsprechend substituierten 6-Hydroxy-2-pyridone der Formel (IX) in einem gegen die Reaktionspartner inerten organischen Lösungsmittel bei 100 – 220° C mit einem Orthoameisensäure-trialkylester der Formel

$$HC(OR)_3 \qquad (X)$$

in der R vorzugsweise für eine $C_1-C_4$-Alkylgruppe steht, und setzt anschließend die erhaltenen in 1-, 3- und 4-Stellung entsprechend substituierten 5-Alkoxymethylen-2,6-pyridione

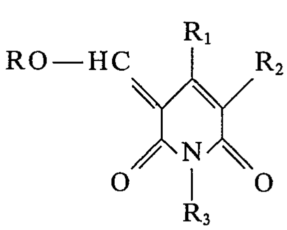

(XI)

in der $R_1$, $R_2$ und $R_3$ die oben angegebene Bedeutung besitzen, in dem gleichen oder einem

anderen organischen Reaktionsmedium bei 100–220°C, vorzugsweise 120–180°C, mit einem Amino-anthrachinon der Formel

$$A-(NH_2)_m \qquad (V)$$

um.

(2) Man kondensiert die Amino-anthrachinone der Formel

$$A-(NH_2)_m \qquad (V)$$

in einem gegen die Reaktionspartner inerten organischen Lösungsmittel bei 100–220°C, vorzugsweise 120–180°C, mit einem Orthoameisensäuretrialkylester der oben genannten Formel (X) und setzt anschließend die erhaltenen Formiminoester der Formel

$$A-(N{=}CH-OR)_m \qquad (XII)$$

in der R vorzugsweise für eine $C_1-C_4$-Alkylgruppe steht, in dem gleichen oder einem anderen organischen Reaktionsmedium bei 100–220°C, vorzugsweise 120–180°C mit in 1-, 3- und 4-Stellung entsprechend substituierten 6-Hydroxy-2-pyridonen der obengenannten Formel (IX) um.

Als organische Lösungsmittel eignen sich für die Verfahren (1) und (2) aromatische und heteroaromatische Verbindungen wie Toluol, Chlorbenzol, Pyridin, o-Dichlorbenzol, 1.2.4-Trichlorbenzol, Nitrobenzol, Alkohole wie Butanol, Diethylenglykolmonomethylether, Ether wie Ethylenglykol-dimethylether oder -diethylether, oder dipolar aprotische Lösungsmittel wie Dimethylformamid, Dimethylacetamid, N-Methyl-pyrrolidon, Tetramethylharnstoff, Dimethylsulfoxid oder Tetramethylensulfon.

(3) In einem weiteren Verfahren überführt man die Aminoanthrachinone der Formel

$$A-(NH_2)_m \qquad (V)$$

bei 40–100°C, vorzugsweise 40–80°C, in einem gegen die Reaktionspartner inerten organischen Lösungsmittel mit einem Dialkylformamid und einem Thionylhalogenid, insbesondere Thionylchlorid, in die entsprechenden Formamidinium-halogenide der Formel

$$A-[NH-CH{=}\overset{\oplus}{N}(R)_2]_m \quad X^{\ominus} \qquad (XIII)$$

worin R vorzugsweise für eine $C_1-C_4$-Alkylgruppe und X für Chlor oder Brom steht, und kondensiert die erhaltenen Formamidinium-halogenide (XIII) in dem gleichen oder einem anderen organischen Lösungsmittel bei 100–220°C, vorzugsweise 120–180°C, in Gegenwart eines säurebindenden Mittels mit in 1-, 3- und 4-Stellung entsprechend substituierten 6-Hydroxy-2-pyridonen der obengenannten Formel (IX).

Als organische Lösungsmittel für das Verfahren (3) eignen sich insbesondere aromatische Kohlenwasserstoffe wie Toluol, Chlorbenzol, o-Dichlorbenzol, 1,2,4-Trichlorbenzol, Nitrobenzol, Ether wie Ethylenglykol-dimethylether oder -diethylether oder dipolar aprotische Lösungsmittel wie Dimethylformamid, Diethylformamid, N-Methylpyrrolidon, Dimethylsulfoxid oder Tetramethylensulfon.

Als Dialkylformamide verwendet man vorzugsweise niedere Dialkylformamide wie Dimethyl- oder Diethylformamide, kann aber auch cyclische Alkyl-carbonsäureamide wie N-Methylpyrrolidon einsetzen.

Als säurebindende Mittel verwendet man in dem Verfahren (3) Alkali- oder Erdalkalimetall-hydroxide oder -carbonate oder Alkali- oder Erdalkalimetallsalze aliphaticher Carbonsäuren, vorzugsweise Natrium- oder Kalium-carbonat, -hydrogencarbonat oder -acetat.

Die neuen Anthrachinon-Azomethin-Verbindungen eignen sich zum Pigmentieren und Färben von organischen makromolekularen Stoffen.

Die Verbindungen der Formel (I) fallen in einer für die Pigmentanwendung geeigneten Form an oder können durch an sich bekannte Nachbehandlungsverfahren in die geeignete Form übergeführt werden, z. B. durch Lösen oder Quellen in starken anorganischen Säuren wie Schwefelsäure und Austragen auf Eis. Die Feinverteilung kann auch durch Mahlen mit oder ohne Mahlhilfsstoffe wie anorganische Salze oder Sand, gegebenenfalls in Anwesenheit von Lösungsmitteln wie Toluol, Xylol, Dichlorbenzol oder N-Methylpyrrolidon erzielt werden. Farbstärke und Transparenz des Pigments können durch Variation der Nachbehandlung beeinflußt werden.

Die Anthrachinon-Azomethin-Verbindungen der Formel (I) eignen sich je nach Substitution als Farbstoffe für synthetische Fasern wie Polyester-, Polyamid- und Polyacrylnitrilfasern, insbesondere

aber aufgrund ihrer Licht- und Migrationsechtheit als Pigmente für die verschiedensten Pigmentapplikationen. Die Pigmente können zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischung mit anderen Stoffen können z. B. solche mit anorganischen Weißpigmenten wie Titandioxid (Rutil) oder mit Zement verstanden werden. Zubereitungen sind z. B. Flushpasten mit organischen Flüssigkeiten oder Teige und Feinteige mit Wasser, Dispergiermitteln und gegebenenfalls Konservierungsmitteln. Die Bezeichnung Anstrichmittel steht z. B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine, z. B. Polyethylen oder Polyamide, Superpolyamide, Polymerisate und Mischpolymerisate aus Acrylester, Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen.

Die erfindungsgemäßen Pigmente I sind weiterhin ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebit und in plastischen Massen gut verteilbar.

Beispiel 1

a) 11 g 97%iges 1-Amino-anthrachinon, 8,5 g Orthoameisensäure-triethylester und 120 g Nitrobenzol werden etwa 3 Stunden bei 140–145°C gerührt, wobei man das entstehende Ethanol über eine Brücke abdestilliert und die Bildung des Formiminoesters der Formel

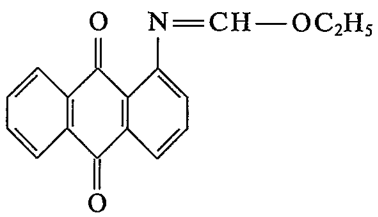

(XIV)

dünnschichtchromatographisch verfolgt. Nach Verschwinden des 1-Amino-anthrachinons versetzt man das Reaktionsgemisch mit 8,1 g 1-Methyl-3-cyan-4-methyl-6-hydroxy-2-pyridon und erhitzt noch 2–3 Stunden auf 145–150°C. Darauf läßt man auf 100°C abkühlen, saugt das in feinen gelben Nadeln auskristallisierte Pigment ab, wäscht mit heißem Nitrobenzol und Methanol und trocknet bei 100°C. Man erhält so 17,9 g (94,2% der Theorie) des rotstichiggelben Pigments der Formel

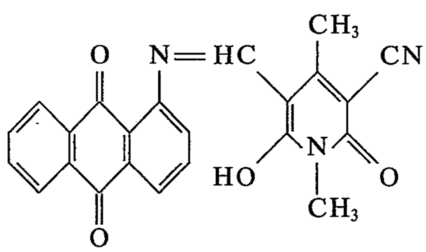

(XV)

Berechnet: C 69,52 H 3,78 N 10,58
Gefunden: C 69,8 H 3,6 N 10,65

Das Pigment kann auch in den folgenden tautomeren Strukturen vorliegen:

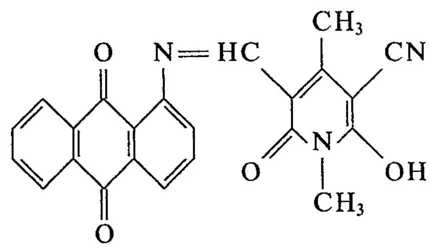

(XV a)

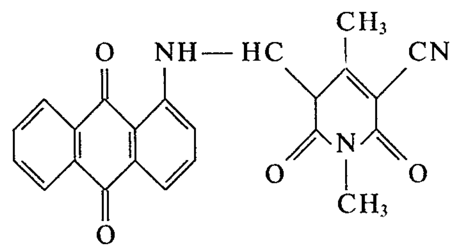

(XV b)

b) 11 g 97%iges 1-Amino-anthrachinon, 4 g Dimethylformamid und 90 g Nitrobenzol werden bei 50–60°C in 1 Stunde mit 7,3 g Thionylchlorid versetzt und bis zur Bildung des Formamidinium-chlorids der Formel

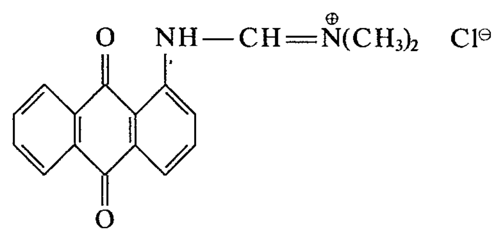

(XVI)

noch etwa 1 Stunde gerührt. Zur Entfernung des überschüssigen Thionylchlorids rührt man noch 1 Stunde im Vakuum nach und versetzt dann das Reaktionsgemisch nacheinander mit 8,1 g 1-Methyl-3-cyan-4-methyl-6-hydroxy-2-pyridon und 12,5 g wasserfreiem Natriumacetat und erhitzt in etwa 1 Stunde auf 150–160°C. Man rührt bis zur Beendigung der Bildung des in gelbroten Prismen kristallisierten Pigments bei 150–160°C, saugt dann bei 100°C ab, wäscht mit heißem Nitrobenzol und mit Methanol und Wasser und erhält nach dem Trocknen 16,4 g (86,3% der Theorie) des mit dem aus Beispiel 1a identischen rotstichiggelben Pigments.

Unter Verwendung der in der folgenden Tabelle 1 aufgeführten entsprechend in 1-, 3- und 4-Stellung substituierten 6-Hydroxy-2-pyridone der Formel (IX)

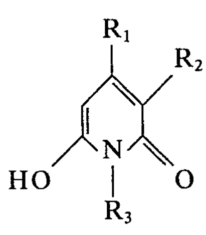

(IX)

erhält man bei Einsatz von 1-Amino-anthrachinon nach den in Beispiel 1 a oder 1 b beschriebenen Verfahren der Formel (XV) entsprechende Anthrachinon-Pigmente in gelben Farbtönen:

Tabelle 1

| Beispiel | $R_1$ | $R_2$ | $R_3$ |
|---|---|---|---|
| 2 | H | CN | $CH_3$ |
| 3 | $C_2H_5$ | CN | $CH_2—CH_2—OH$ |
| 4 | $i\text{-}C_3H_7$ | CN | $CH_3$ |
| 5 | $n\text{-}C_4H_9$ | CN | $CH_3$ |
| 6 | $CH_3$ | $COCH_3$ | $CH_3$ |
| 7 | $CH_2—CH_2—OH$ | CN | $C_2H_5$ |
| 8 | COOH | H | $CH_3$ |
| 9 | $COOCH_3$ | H | $CH_3$ |
| 10 | OH | CN | $CH_3$ |
| 11 | $p\text{-}C_6H_4—Cl$ | CN | $CH_3$ |
| 12 | OH | H | $CH_3$ |
| 13 | $CH_3$ | CN | $—(CH_2)_{11}—CH_3$ |
| 14 | $CH_3$ | $COOC_2H_5$ | $CH_3$ |
| 15 | $CH_3$ | Br | $CH_3$ |
| 16 | $CH_3$ | $NO_2$ | $CH_3$ |
| 17 | $CH_3$ | $CO—N(CH_3)_2$ | $CH_3$ |
| 18 | $CH_3$ | $SO_2—N(CH_3)_2$ | $CH_3$ |
| 19 | $CH_3$ | $—SO_2—OCH_3$ | $C_2H_5$ |
| 20 | $CH_3$ | 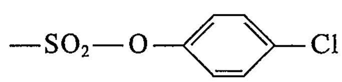 | $CH_3$ |
| 21 | $CH_3$ | 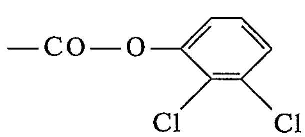 | $n\text{-}C_3H_7$ |
| 22 | $CH_3$ | $-COO-CH_2-CH_2-OCH_3$ | $CH_3$ |
| 23 | $C_2H_5$ | $—SO_2—CH_3$ | $CH_3$ |
| 24 | $CH_3$ | 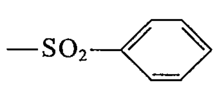 | $n\text{-}C_4H_9$ |
| 25 | $CH_3$ | 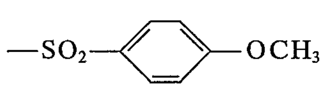 | $CH_3$ |

Fortsetzung

| Beispiel | $R_1$ | $R_2$ | $R_3$ |
|---|---|---|---|
| 26 | $CH_3$ | 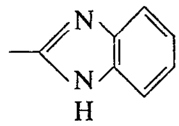 | $CH_3$ |
| 27 | $CH_3$ | 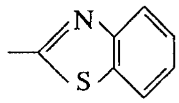 | $CH_3$ |

Pigmente mit ausgezeichneten Eigenschaften und ähnlichen Farbtönen erhält man, wenn man in den Beispielen 1 – 27 anstelle des dort verwandten 1-Amino-anthrachinons folgende 1-Amino-anthrachinon-Derivate einsetzt:

1-Amino-4-chlor-anthrachinon,
1-Amino-5-chlor-anthrachinon,
1-Amino-6(7)-chlor-anthrachinon,
1-Amino-6,7-dichlor-anthrachinon,
1-Amino-2,4-dibrom-anthrachinon,
1-Amino-6-fluor-anthrachinon,
1-Amino-4-nitro-anthrachinon,
1-Amino-5-nitro-anthrachinon,
1-Amino-anthrachinon-2-carbonsäure-amid,
1-Amino-2-acetyl-anthrachinon.

Beispiel 28

8,5 g 87%iges 1-Amino-5-benzoylamino-anthrachinon, 3 g Orthoameisensäuretrimethylester werden in 75 g Nitrobenzol etwa 2 – 3 Stunden auf 140 – 150°C erhitzt, wobei man das entstehende Methanol über eine kurze Brücke abdestilliert. Nach Verschwinden des Ausgangsmaterials trägt man 6 g 1-p-Tolyl-3-cyan-4-methyl-6-hydroxy-2-pyridon ein und erhitzt weitere 4 Stunden auf 145 – 150°C. Nach Abkühlen auf 100°C saugt man das in roten Prismen kristallisierte Pigment ab, wäscht mit heißem Nitrobenzol und Methanol und erhält nach dem Trocknen bei 100°C 11,9 g (93% der Theorie) des roten Pigments der Formel

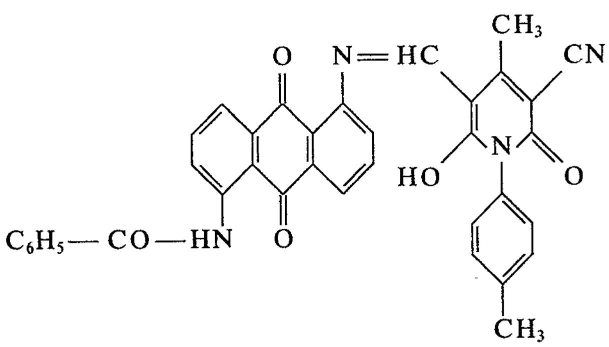

(XVII)

| | | | |
|---|---|---|---|
| Berechnet: | C 72,97 | H 4,05 | N 9,46 |
| Gefunden: | C 72,62 | H 3,95 | N 9,41 |

Mit ähnlichen Ausbeuten erhält man das Pigment, wenn man anstelle des Nitrobenzols folgende Lösungsmittel verwendet: o-Dichlorbenzol, 1.2.4-Trichlorbenzol, Diethylenglykolmonoethylether, Diethylenglykoldimethylether, Dimethylformamid, N-Methylpyrrolidon, Dimethylsulfoxid und Tetramethylensulfon.

Unter Verwendung der in der folgenden Tabelle 2 aufgeführten entsprechend in 3- und 4-Stellung substituierten 1-Aryl- bzw. 1-Heteroaryl-6-hydroxy-2-pyridone der Formel (IX)

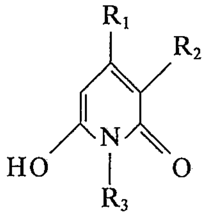

(IX)

erhält man bei Einsatz von 1-Amino-5-benzoylamino-anthrachinon entsprechende Anthrachinon-Pigmente in roten Farbtönen:

Tabelle 2

| Beispiel | $R_1$ | $R_2$ | $R_3$ |
|---|---|---|---|
| 29 | $CH_3$ | CN | 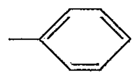 |
| 30 | $CH_3$ | $CO-CH_3$ | 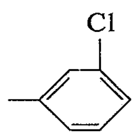 |
| 31 | $CH_3$ | CN | 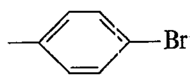 |
| 32 | $COOCH_3$ | CN | 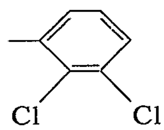 |
| 33 | $CH_3$ | $SO_2-CH_3$ | 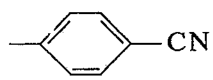 |
| 34 | $CH_3$ | CN | 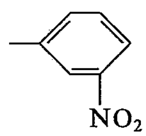 |
| 35 | $CH_3$ | CN | 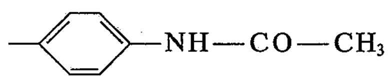 |
| 36 | $C_2H_5$ | $CO-C_2H_5$ | 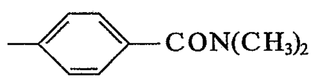 |
| 37 | $CH_3$ | CN | 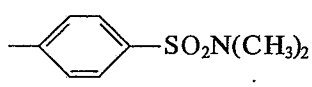 |
| 38 | $CH_3$ | $CO-CH_3$ | 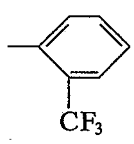 |
| 39 | $CH_3$ | CN | 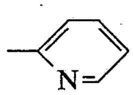 |

Fortsetzung

| Beispiel | $R_1$ | $R_2$ | $R_3$ |
|---|---|---|---|
| 40 | $CH_3$ | CN | 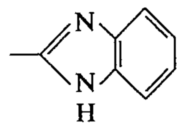 |

### Beispiel 41

8,5 g 95%iges 1-Amino-4-benzoylamino-anthrachinon, 4,4 g Orthoameisensäuretrimethylester werden in 100 g o-Dichlorbenzol etwa 2–3 Stunden auf 140–150°C erhitzt, wobei man das entstehende Ethanol über eine kurze Brücke abdestilliert. Nach Verschwinden des Ausgangsmaterials trägt man 4,7 g 1-Methyl-3-cyan-4-methyl-6-hydroxy-2-pyridon ein und erhitzt weitere 4 Stunden auf 140–150°C. Nach Abkühlen auf 100°C saugt man das in schönen roten Prismen kristallisierte Pigment ab, wäscht mit heißem o-Dichlorbenzol und Methanol und erhält nach dem Trocknen bei 100°C 14 g (94,7% der Theorie) des blaustichigroten Pigments der Formel

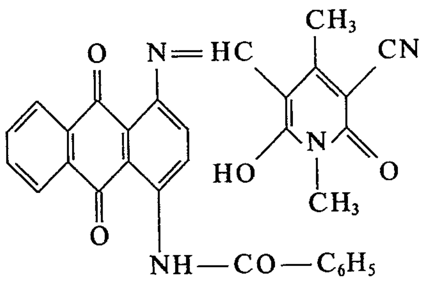

(XVIII)

| | | | |
|---|---|---|---|
| Berechnet: | C 69,77 | H 3,88 | N 10,85 |
| Gefunden: | C 69,80 | H 3,9 | N 11,0 |

Pigmente mit ausgezeichneten Eigenschaften und ähnlichen Farbtönen erhält man, wenn man anstelle des obengenannten 1-Amino-4-benzoylamino-anthrachinons das 1-Amino-4-(4-chlorbenzoylamino)-anthrachinon, das 1-Amino-4-(2.4-dichlorbenzoylamino)-anthrachinon, das 1-Amino-4-(3-nitrobenzoylamino)-anthrachinon oder das 1-Amino-4-(4-acetylaminobenzoylamino)-anthrachinon verwendet.

### Beispiel 42

11,8 g 1-Amino-4-hydroxy-anthrachinon, 8,5 g Orthoameisensäuretriethylester und 120 g Nitrobenzol werden etwa 3 Stunden bei 140–145°C gerührt, wobei man das entstehende Ethanol über eine Brücke abdestilliert. Nach Verschwinden des Ausgangsmaterials trägt man 9,6 g 1-(2-Hydroxyethyl)-3-cyan-4-methyl-6-hydroxy-2-pyridon ein und erhitzt weitere 4 Stunden auf 140–150°C. Nach Abkühlen auf 100°C saugt man das in schönen dunkelroten Nadeln kristallisierte Pigment ab, wäscht mit heißem Nitrobenzol und Methanol und erhält nach dem Trocknen bei 100°C 19,9 g (91% der Theorie) des braunroten Pigments der Formel

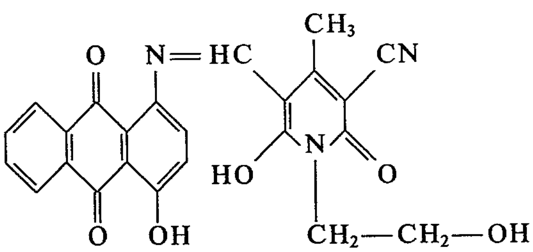

(XIX)

| | | | |
|---|---|---|---|
| Berechnet: | C 65,01 | H 3,84 | N 9,48 |
| Gefunden: | C 65,0 | H 3,80 | N 9,50 |

Beispiel 43

5,5 g 1.5-Diamino-anthrachinon, 8,8 g Orthoameisensäuretriethylester werden in 80 g Nitrobenzol etwa 3 Stunden auf 145–150°C erhitzt, wobei man das entstehende Ethanol über eine Brücke abdestilliert und das Verschwinden des Ausgangsmaterials dünnschichtchromatographisch verfolgt. Man versetzt nun mit 7,6 g 1-Methyl-3-cyan-4-methyl-6-hydroxy-2-pyridon und erhitzt so lange auf 140–150°C, bis die Pigmentbildung beendet ist, was etwa 4 Stunden erfordert. Man saugt darauf das in orangegelben Prismen kristallisierte Pigment bei 120°C ab, wäscht mit heißem Nitrobenzol und Methanol und erhält nach dem Trocknen bei 100°C 13,2 g (97,5% der Theorie) des orangefarbenen Pigments der Formel

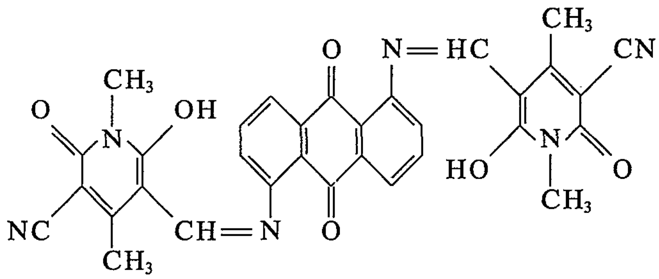

(XX)

| | | | |
|---|---|---|---|
| Berechnet: | C 65,53 | H 3,75 | N 14,33 |
| Gefunden: | C 65,55 | H 3,80 | N 14,13 |

Verwendet man anstelle des obengenannten 1.5-Diamino-anthrachinons in Beispiel 43 5,5 g 1.8-Diamino-anthrachinon, so erhält man 13,3 g (98,2% der Theorie) des rotstichigorangefarbenen Pigments der Formel

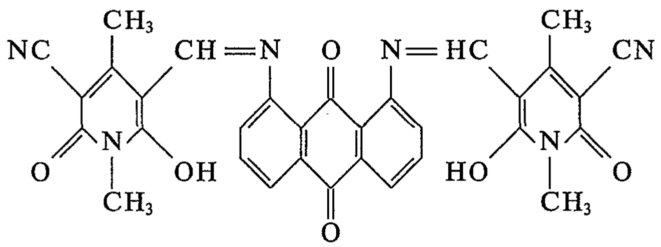

(XXI)

| | | | |
|---|---|---|---|
| Berechnet: | C 65,53 | H 3,75 | N 14,33 |
| Gefunden: | C 65,42 | H 3,62 | N 14,41 |

Setzt man anstelle des obengenannten 1.5-Diamino-anthrachinons in Beispiel 43 5,5 g 1.4-Diamino-anthrachinon ein, so erhält man 13,3 g (98,2% der Theorie) des dunkelbraunen Pigments der Formel

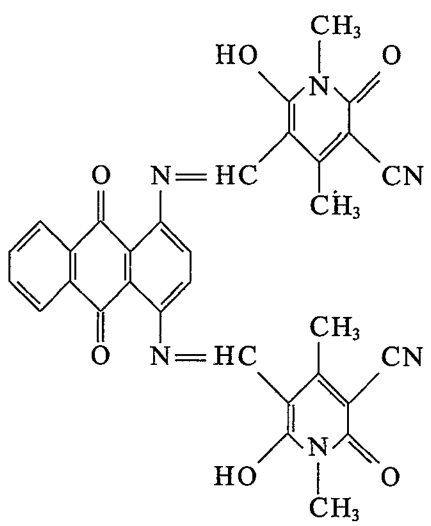

(XXII)

Berechnet: C 65,53 H 3,75 N 14,33
Gefunden: C 65,40 H 3,60 N 14,30

Beispiel 44

5 g 1.5-Diamino-4.8-dihydroxy-anthrachinon, 4,4 g Orthoameisensäuretrimethylester werden in 75 g Nitrobenzol etwa 3 Stunden auf 145—150° C erhitzt, wobei man das entstehende Methanol über eine Brücke abdestilliert und das Verschwinden des Ausgangsmaterials dünnschichtchromatographisch verfolgt. Man versetzt nun mit 8,1 g 1-Methyl-3-cyan-4-methyl-6-hydroxy-2-pyridon und erhitzt so lange auf 160—170° C, bis die Pigmentbildung beendet ist. Man saugt darauf das in schönen grünschwarzen Nadeln kristallisierte Pigment bei 120° C ab, wäscht mit heißem Nitrobenzol und Methanol und erhält nach dem Trocknen bei 100° C 10,5 g (91,8% der Theorie) des blauschwarzen Pigments der Formel

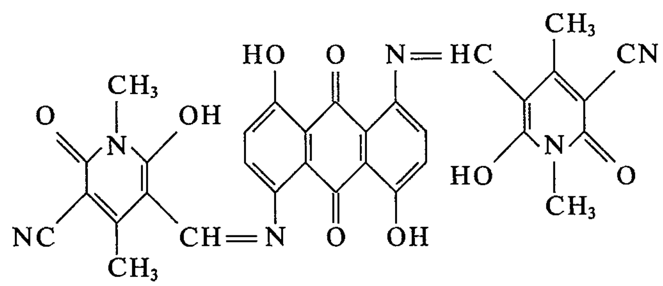

(XXIII)

Berechnet: C 62,34 H 3,57 N 13,64
Gefunden: C 62,23 H 3,60 N 13,50

Verwendet man in Beispiel 44 anstelle des 1.5-Diamino-4.8-dihydroxy-anthrachinons 5 g 1.8-Diamino-4.5-dihydroxy-anthrachinon, so erhält man 10,75 g (94% der Theorie) des blauschwarzen Pigments der Formel

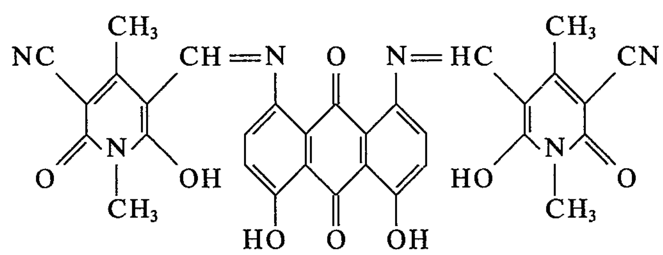

(XXIV)

Berechnet: C 62,34 H 3,57 N 13,64
Gefunden: C 62,21 H 3,60 N 13,51

Pigmente mit ausgezeichneten Eigenschaften und ähnlichen Farbtönen erhält man, wenn man in Beispiel 44 anstelle des dort verwandten 1.5-Diamino-4,8-dihydroxy-anthrachinons das 1.5-Diamino-4.8-dihydroxy-x-brom-anthrachinon oder das 1.8-Diamino-4.8-dihydroxy-x-brom-anthrachinon einsetzt.

Beispiel 45

3,4 g 1.4.5.8-Tetraamino-anthrachinon, 9 g Orthoameisensäuretriethylester und 125 g Nitrobenzol werden 3—4 Stunden auf 145—150° C erhitzt, wobei man das entstehende Ethanol über eine Brücke abdestilliert und das Verschwinden des Ausgangsmaterials dünnschichtchromatographisch verfolgt. Man versetzt nun mit 8,4 g 1-Methyl-3-cyan-4-methyl-6-hydroxy-2-pyridon und erhitzt so lange auf 175—180° C, bis die Bildung des Pigments in blauschwarzen Prismen beendet ist. Man saugt darauf das Pigment bei 120° C ab, wäscht mit heißem Nitrobenzol und Methanol und erhält nach dem Trocknen bei 100° C 11,1 g (90,8% der Theorie) des blaustichiggrauen Pigments der Formel

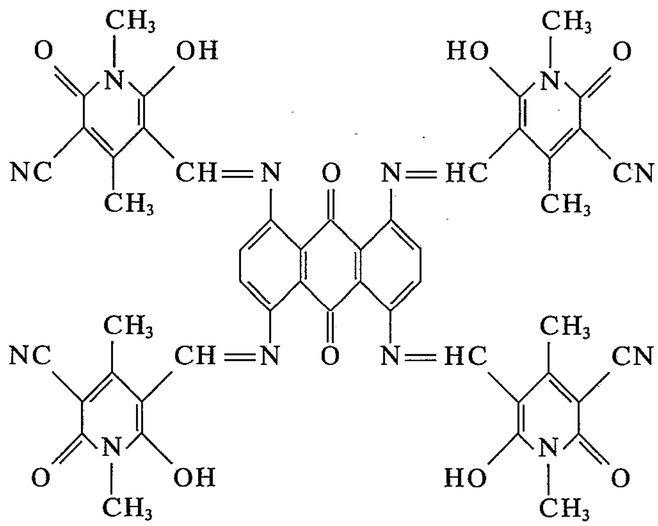

(XXV)

Berechnet: N 17,43
Gefunden: N 17,21

Beispiel 46

13,37 g 1-Amino-4.5.8-trihydroxy-anthrachinon, 8,8 g Orthoameisensäuretriethylester und 80 g Nitrobenzol werden etwa 3 Stunden auf 145—150° C erhitzt, wobei man das enstehende Ethanol über eine Brücke abdestilliert und das Verschwinden des Ausgangsmaterials dünnschichtchromatographisch verfolgt. Man versetzt nun mit 8,7 g 1-Methyl-3-cyan-4-methyl-6-hydroxy-2-pyridon und erhitzt so lange auf 155—160° C, bis die Bildung des Pigments beendet ist. Nach dem Abkühlen auf 110° C saugt man das in gelbbraunen Prismen kristallisierte Pigment ab, wäscht mit heißem Nitrobenzol und Methanol und erhält nach dem Trocknen bei 100° C 19,6 g (89,3% der Theorie) des braunen Pigments der Formel

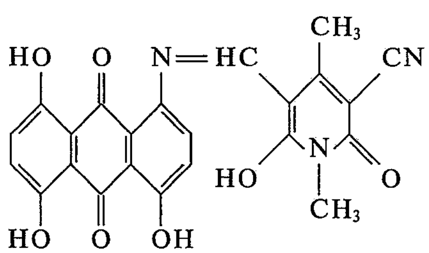

(XXVI)

Berechnet: N 9,44
Gefunden: N 9,35

Verwendet man in Beispiel 46 anstelle von 1-Amino-4.5.8-trihydroxy-anthrachinon äquivalente Mengen der in Tabelle 3 aufgeführten Amino-anthrachinone, so werden entsprechend Pigmente in den dort angegebenen Farbtönen erhalten.

Tabelle 3

| Beispiel | Amino-anthrachinon | Farbton des erhaltenen Pigments |
|---|---|---|
| 47 | 1-Amino-4.8-dihydroxyanthrachinon | Violett |
| 48 | 1-Amino-2-brom-4-hydroxy-anthrachinon | Rot |
| 49 | 1-Amino-4-anilino-anthrachinon | rotstichig Grau |

Beispiel 50

5,5 g 97%iges 1-Amino-anthrachinon, 3 g Orthoameisensäuretrimethylester und 60 g Nitrobenzol werden etwa 3 Stunden auf 145–150°C erhitzt, wobei man das entstehende Methanol über eine Brücke abdestilliert und das Verschwinden des Ausgangsmaterials dünnschichtchromatographisch verfolgt. Man versetzt nun mit 6 g 1-p-Tolyl-3-cyan-4-methyl-6-hydroxy-2-pyridon und erhitzt so lange auf 145–150°C, bis die Bildung des Pigments beendet ist. Nach dem Abkühlen saugt man das in schönen gelben langen Prismen kristallisierte Produkt ab, wäscht mit Nitrobenzol und Methanol und erhält nach dem Trocknen 11,3 g (96,9% der Theorie) des gelben Pigments der Formel

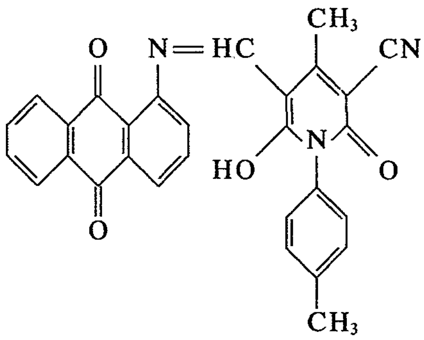

(XXVII)

| | | | |
|---|---|---|---|
| Berechnet: | C 73,57 | H 4,02 | N 8,88 |
| Gefunden: | C 73,41 | H 3,90 | N 8,71 |

Verwendet man anstelle des obengenannten 1-Amino-anthrachinons 8,5 g 1-Amino-4-benzoylamino-anthrachinon, so erhält man 13,4 g des in schönen rotorangefarbenen Nadeln kristallisierten Pigments der Formel

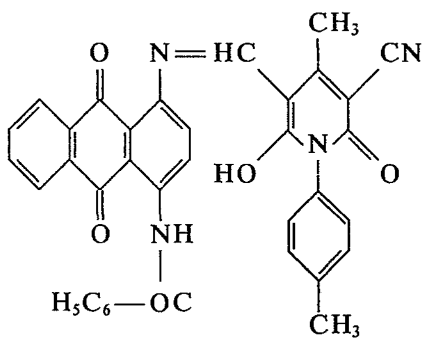

(XXVIII)

| | | | |
|---|---|---|---|
| Berechnet: | C 72,97 | H 4,05 | N 9,46 |
| Gefunden: | C 72,78 | H 4,1 | N 9,58 |

Setzt man 5 g 1.5-Diamino-anthrachinon in 75 g Nitrobenzol mit 5 g Orthoameisensäuretrimethylester und nachfolgend mit 10,1 g 1-p-Tolyl-3-cyan-4-methyl-6-hydroxy-2-pyridon gemäß Beispiel 50 um, so erhält man 14,6 g (94,2% der Theorie) des in orangefarbenen Prismen kristallisierte Pigments der Formel

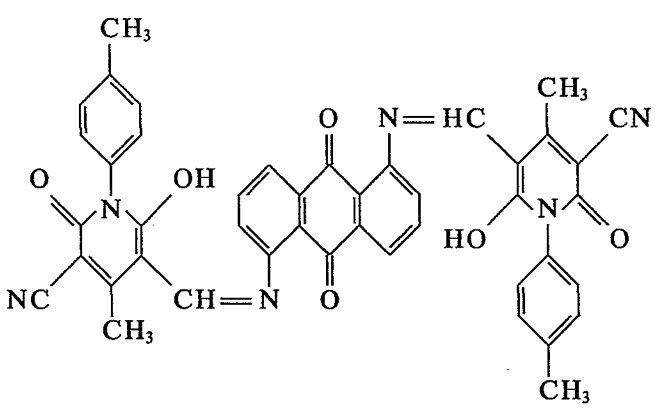

(XXIX)

| | | | |
|---|---|---|---|
| Berechnet: | C 71,54 | H 4,07 | N 11,38 |
| Gefunden: | C 71,41 | H 3,95 | N 11,42 |

Beispiel 51

11 g 1-Amino-anthrachinon, 5,8 g Orthoameisensäuretrimethylester und 75 g Orthodichlorbenzol werden etwa 3 Stunden auf 145—150°C erhitzt, wobei man das entstehende Methanol über eine Brücke abdestilliert. Nach Verschwinden des Ausgangsmaterials versetzt man mit 11,8 g 1-(3-Ethoxypropyl)-3-cyan-4-methyl-6-hydroxy-2-pyridon und erhitzt so lange auf 145—150°C, bis die Bildung des Farbstoffes beendet ist. Nach dem Abkühlen saugt man den in schönen gelben verfilzten Nadeln kristallisierten Farbstoff ab, wäscht mit Orthodichlorbenzol und Methanol und erhält nach dem Trocknen 19,8 g (85,6% der Theorie) des orangefarbenen Farbstoffes der Formel

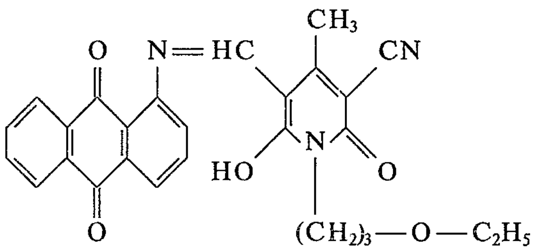

(XXX)

| | | | |
|---|---|---|---|
| Berechnet: | C 69,08 | H 4,9 | N 8,69 |
| Gefunden: | C 69,0 | H 4,8 | N 8,78 |

Der Farbstoff färbt Polyesterfasern nach den bekannten Auszieh- oder Thermosolverfahren in brillanten gelborangefarbenen Tönen mit ausgezeichneten Wasch-, Thermofixier- und Lichtechtheiten.

Ersetzt man in Beispiel 51 das dort verwandte Pyridon durch 11,75 g 1-(3-Dimethylamino-propyl)-3-cyan-4-methyl-6-hydroxy-2-pyridon, so erhält man den Farbstoff der Formel

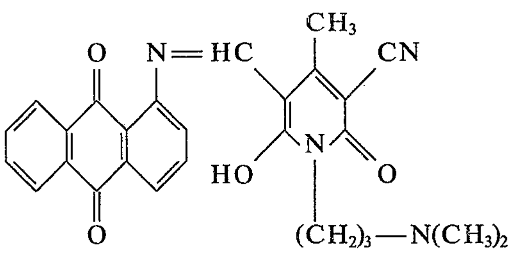

(XXXI)

der nach der bekannten Quaternierung mit Dimethylsulfat in Chlorbenzol den Farbstoff der Formel

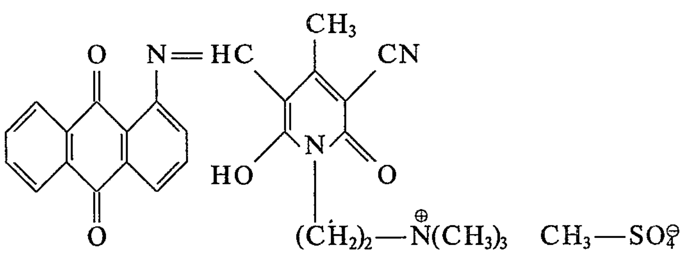

(XXXII)

liefert, welcher Polyacrylnitrilfasern nach den üblichen Färbeverfahren in brillanten rotstichiggelben Farbtönen färbt.

Beispiel 52

12,6 g 5-Amino-1,9-isothiazolanthron, 5,8 g Orthoameisensäuretrimethylester und 75 g Nitrobenzol werden etwa 3 Stunden auf 145—150°C erhitzt, wobei man das entstehende Methanol über eine Brücke abdestilliert. Nach Verschwinden des Ausgangsmaterials versetzt man mit 8,2 g 1-Methyl-3-cyan-4-methyl-6-hydroxy-2-pyridon und erhitzt so lange auf 145—150°C, bis die Bildung

des Pigments beendet ist. Nach dem Abkühlen saugt man bei 100°C das in gelben Prismen kristallisierte Pigment ab, wäscht mit Nitrobenzol und Methanol und erhält nach dem Trocknen 19,4 g (91,1% der Theorie) des Pigments der Formel

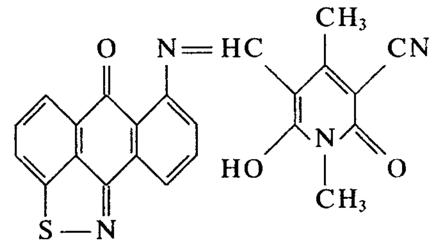

(XXXIII)

| | | | | |
|---|---|---|---|---|
| Berechnet: | C 64,79 | H 3,29 | N 13,15 | S 7,51 |
| Gefunden: | C 64,68 | H 3,2 | N 13,08 | S 7,43 |

Ähnliche gelbe Pigmente erhält man, wenn man anstelle des obengenannten 5-Amino-1.9-isothiazolanthrons äquivalente Mengen 4-Amino- oder 5-Amino-1.9-pyrazolanthron einsetzt.

Beispiel 53

a) 8 g des nach Beispiel 1a erhaltenen feinverteilten Pigments werden mit einem Einbrennlack aus 25 g Kokosölalkydharz (40% Kokosöl), 10 g Melaminharz, 50 g Toluol und 7 g Glykolmonomethylether auf einer automatischen Hoover-Muller-Anreibmaschine angerieben. Man trägt die Mischung auf die zu lackierende Unterlage auf, härtet den Lack durch Einbrennen bei 130°C und erhält rotstichiggelbe Lackierungen sehr guter Überlackierechtheit und hervorragender Licht- und Wetterechtheit.
Pigmentierte Einbrennlacke gleicher Echtheiten erhält man, wenn man 15—25 g des angegebenen Alkydharzes oder eines Alkydharzes auf Basis von Baumwollsaatöl, Ricinenöl, Ricinusöl oder synthetischen Fettsäuren verwendet und statt der angegebenen Melaminharzmenge 10—15 g des erwähnten Melaminharzes oder eines Kondensationsproduktes von Formaldehyd mit Harnstoff oder mit Benzoguanamin einsetzt.

b) Reibt man statt der angegebenen Pigmentmenge 1 bis 10 g einer Mischung von Titandioxid (Rutiltyp) mit dem in Beispiel 53a angegebenen Pigment im Verhältnis 0,5—50 : 1 in den im Beispiel 53a angegebenen Lack ein, erhält man bei gleicher Weiterverarbeitung Lackierungen gleicher Echtheiten und mit steigendem Titandioxidgehalt nach weiß verschobenem, rotstichiggelbem Farbton.

Beispiel 54

In 100 g eines Nitrocelluloselackes, der aus 44 g Collodiumwolle (niedrigviskos, 35%ig, butanolfeucht), 5 g Dibutylphthalat, 40 g Ethylacetat, 20 g Toluol, 4 g n-Butanol und 10 g Glykolmonomethylether besteht, werden 6 g feinverteiltes Pigment gemäß Beispiel 1a eingerieben. Nach Verstreichen und Trocknen erhält an rotstichiggelbe Lackierungen hervorragender Licht- und Überlackierechtheit. Zu gleichen Ergebnissen kommt man bei Verwendung von Nitrolacken mit 10—15 g Nitrocellulosegehalt, 5—10 g Weichmachergehalt und 70—85 g Lösungsmittelgemisch unter bevorzugter Verwendung von aliphatischen Estern wie Ethylacetat, Butylacetat und Aromaten wie Toluol und Xylol und kleineren Anteilen aliphatischer Ether wie Glykolether und Alkohole wie Butanol. Unter Weichmachern können z. B. verstanden werden: Phthalsäureester wie Dioctylphthalat, Dibutylphthalat, Ester der Phosphorsäure, Ricinusöl allein oder in Kombination mit ölmidifizierten Alkydharzen.

Lackierungen mit ähnlichen Echtheitseigenschaften erhält man bei Verwendung von anderen physikalisch trocknenden Sprit-, Zapon- und Nitrolacken, von lufttrocknenden Öl-, Kunstharz- und Nitrokombinationslacken, ofen- und lufttrocknenden Epoxidharzlacken, gegebenenfalls in Kombination mit Harnstoff-, Melamin-, Alkyd- oder Phenolharzen.

Beispiel 55

5 g in feine Verteilung gebrachtes Pigment gemäß Beispiel 1a werden in 100 g eines paraffinfrei trocknenden ungesättigten Polyesterharzes in einer Porzellankugelmühle angerieben. Mit der Anreibung werden 10 g Styrol, 59 g Melamin-Formaldehyd-Harz und 1 g einer Paste aus 40%

Cyclohexanonperoxid und 60% Dibutylphthalat gut verrührt und schließlich 4 g Trocknerlösung (10%iges Kobaltnaphthenat in Testbenzin) und 1 g Siliconöllösung (1%ig in Xylol) beigemischt. Man trägt die Mischung auf grundiertes Holz auf und erhält eine hochglänzende, wasserfeste und wetterechte rotstichiggelbe Lackierung von hervorragender Lichtechtheit.

Verwendet man statt des Reaktionslackes auf Basis ungesättigter Polyesterharze aminhärtende Epoxidharzlacke mit Dipropylendiamin als Aminokomponente, erhält man rotstichiggelbe Lackierungen hervorragender Wetter- und Ausblühechtheit.

Beispiel 56

100 g einer 65%igen Lösung eines aliphatischen Polyesters mit ca. 8% freien Hydroxylgruppen in Glykolmonomethyletheracetat werden mit 5 g des nach Beispiel 1a erhaltenen Pigments angerieben und sodann mit 44 g einer 67%igen Lösung des Umsetzungsproduktes von 1 Mol Trimethylolpropan mit 3 Mol Toluylen-diisocyanat gut vermischt. Ohne Beeinträchtigung der Topfzeit ergeben sich nach Auftragen des Gemisches und Reaktion der Komponenten hochglänzende rotstichiggelbe Polyurethanlackierungen hervorragender Ausblüh-, Licht- und Wetterechtheit.

Pigmentierungen ähnlicher Echtheit erhält man bei Anwendung anderer Zweikomponentenlacke auf Basis von aromatischen oder aliphatischen Isocyanaten und hydroxylgruppenhaltigen Polyethern oder Polyestern, sowie mit feuchtigkeitstrocknenden, Polyharnstofflackierungen ergebenden Polyisocyanatlacken.

Beispiel 57

5 g eines Feinteiges, erhalten durch Kneten von 50 g des nach Beispiel 1a erhaltenen Pigments mit 15 g eines Arylpolyglykolether-Emulgators und 35 g Wasser werden mit 10 g Schwerspat als Füllstoff, 10 g Titandioxid (Rutiltyp) als Weißpigment und 40 g einer wäßrigen Dispersionsfarbe, enthaltend ca. 50% Polyvinylacetat, gemischt. Man verstreicht die Farbe und erhält nach dem Trocknen rotstichiggelbe Anstriche sehr guter Kalk- und Zementechtheit sowie hervorragender Wetter- und Lichtechtheit.

Der durch Kneten erhaltene Feinteig eignet sich gleichermaßen zum Pigmentieren klarer Polyvinylacetat-Dispersionsfarben, für Dispersionsfarben, die Mischpolymerisate aus Styrol und Maleinsäuren als Bindemittel enthalten, sowie Dispersionsfarben auf Basis von Polyvinylpropionat, Polymethacrylat oder Butadienstyrol.

Beispiel 58

10 g des in Beispiel 57 erwähnten Pigment-Teiges werden mit einer Mischung aus 5 g Kreide und 5 g 20%iger Leimlösung vermischt. Man erhält eine rotstichiggelbe Tapetenstreichfarbe, mit der man Überzüge hervorragender Lichtechtheit erzielt. Zur Herstellung des Pigment-Teiges können auch andere nichtionogene Emulgatoren wie die Umsetzungsprodukte von Nonylphenol mit Ethylenoxid oder ionogene Netzmittel, wie die Natriumsalze von Alkylarylsulfonsäuren, z. B. der Dinaphthylmethandisulfonsäure, Natriumsalze von substituierten Sulfonsäureestern und Natriumsalze von Paraffinsulfonsäuren in Kombination mit Alkylpolyglykolethern verwendet werden.

Beispiel 59

Eine Mischung aus 65 g Polyvinylchlorid, 35 g Diisooctylphthalat, 2 g Dibutylzinnmercaptid, 0,5 g Titandioxid und 0,5 g des Pigments von Beispiel 1a wird auf einem Mischwalzwerk bei 165°C eingefärbt. Man erhält eine intensiv rotstichiggelbgefärbte Masse, die zur Herstellung von Folien oder Formkörpern dienen kann. Die Färbung zeichnet sich durch hervorragende Licht- und sehr gute Weichmacherechtheit aus.

Beispiel 60

0,2 g Pigment nach Beispiel 1a werden mit 100 g Polyethylen-, Polypropylen- oder Polystyrolgranulat gemischt. Die Mischung kann entweder bei 220 bis 280°C direkt in einer Spritzgußmaschine verspritzt, oder in einer Strangpresse zu gefärbten Stäben bzw. auf dem Mischwalzwerk zu gefärbten Fellen verarbeitet werden. Die Stäbe bzw. Felle werden gegebenenfalls granuliert und in einer Spritzgußmaschine verspritzt.

Die rotstichiggelben Formlinge besitzen sehr gute Licht- und Migrationsechtheit. In ähnlicher Weise

können bei 280–300°C, gegebenenfalls unter Stickstoffatmosphäre, synthetische Polyamide aus Caprolactam oder Adipinsäure und Hexamethylendiamin oder die Kondensate aus Terephthalsäure und Ethylenglykol gefärbt werden.

Beispiel 61

1 g Pigment nach Beispiel 1a, 10 g Titandioxid (Rutiltyp) und 100 g eines in Pulverform vorliegenden Mischpolymerisates auf Basis von Acrylnitril-Butadien-Styrol werden gemischt und auf einem Walzwerk bei 140–180°C eingefärbt. Man erhält ein rotstichiggelbgefärbtes Fell, das granuliert und in einer Spritzgußmaschine bei 200–250°C verspritzt wird. Man erhält rotstichiggelbe Formlinge sehr guter Licht- und Migrationsechtheit sowie ausgezeichneter Hitzebeständigkeit.

Auf ähnliche Weise, jedoch bei Temperaturen von 180–220°C und ohne Zusatz von Titandioxid werden Kunststoffe auf Basis von Celluloseacetat, Cellulosebutyrat und deren Gemische mit ähnlichen Echtheiten gefärbt.

Beispiel 62

0,2 g Pigment nach Beispiel 1a werden in feinverteilter Form mit 100 g eines Kunststoffes auf Polycarbonat-Basis in einem Extruder oder in einer Knetschnecke bei 250–280°C gemischt und zu Granulat verarbeitet. Man erhält ein rotstichiggelbes, transparentes Granulat hervorragender Lichtechtheit und Hitzebeständigkeit.

Beispiel 63

90 g eines schwach verzweigten Polypropylenglykols mit einem Molekulargewicht von 2500 und einer Hydroxylzahl von 56, 0,25 g Endoethylenpiperazin, 0,3 g Zinn(II)-octoat, 1,0 g eines Polyethersiloxans, 3,5 g Wasser, 12,0 g einer Anreibung von 10 g Pigment nach Beispiel 1a in 50 g des angegebenen Polypropylenglykols werden gut miteinander gemischt und anschließend mit 45 g Toluylendiisocyanat (80% 2.4- und 20% 2.6-Isomeres) innig gemischt und in eine Form gegossen. Die Mischung trübt sich nach 6 Sekunden und die Schaumstoffbildung erfolgt. Nach 70 Sekunden hat sich ein intensiv rotstichiggelbgefärbter, weicher Polyurethanschaumstoff gebildet, dessen Pigmentierung hervorragende Lichtechtheit aufweist.

Beispiel 64

90 g eines schwach verzweigten Polyesters aus Adipinsäure, Diethylenglykol und Trimethylolpropan mit einem Molekulargewicht von 2000 und einer Hydroxylzahl von 60 werden mit folgenden Komponenten vermischt: 1,2 g Dimethylbenzylamin, 2,5 g Natrium-Ricinusölsulfat, 2,0 g eines oxethylierten, benzylierten Oxidiphenyls, 1,75 g Wasser, 12 g einer Paste, hergestellt durch Anreiben von 10 g des Pigments nach Beispiel 1a in 50 g des oben angegebenen Polyesters. Nach der Mischung werden unter Rühren 40 g Toluylendiisocyanat (65% 2.4- und 35% 2.6-Isomeres) eingerührt und die Mischung in eine Form gegossen und verschäumt. Nach 60 Sekunden hat sich rotstichiggelbgefärbter, weicher Polyurethanschaumstoff gebildet, dessen Einfärbung sich durch sehr gute Lichtechtheit auszeichnet.

Beispiel 65

Mit einer Druckfarbe, hergestellt durch Anreiben von 35 g Pigment nach Beispiel 1a und 65 g Leinöl und Zugabe von 1 g Siccativ (Co-Naphthenat, 50%ig in Testbenzin) werden rotstichiggelbe Offset-Drucke hoher Brillanz und Farbstärke und sehr guter Licht- und Lackierechtheit erhalten. Verwendung dieser Druckfarben in Buch-, Licht-, Stein- oder Stahlstichdruck führt zu rotstichiggelben Drucken ähnlicher Echtheiten. Verwendet man das Pigment zur Färbung von Blechdruck- oder niedrigviskosen Tiefdruckfarben oder Drucktinten, erhält man rotstichiggelbe Drucke ähnlicher Echtheiten.

Beispiel 66

Aus 10 g des in Beispiel 57 angegebenen Pigment-Feinteiges, 100 g Traganth 3%ig, 100 g einer wäßrigen 50%igen Eialbuminlösung und 25 g eines nichtionogenen Netzmittels wird eine Druckpaste

bereitet. Man bedruckt ein Textilfasergewebe, dämpft bei 100°C und erhält einen rotstichiggelben Druck, der sich durch vorzügliche Echtheiten, insbesondere Lichtechtheiten auszeichnet. Im Druckansatz können anstelle des Traganths und Eialbumins weitere, für das Fixieren auf der Faser verwendbare Bindemittel, beispielsweise solche auf Kunstharzbasis, Britishgum oder Celluloseglykolat verwendet werden.

Beispiel 67

Eine Mischung aus 100 g Crepe hell, 2,6 g Schwefel, 1 g Stearinsäure, 1 g Mercaptobenzthiazol, 0,2 g Hexamethylentetramin, 5 g Zinkoxid, 60 g Kreide und 2 g Titandioxid (Anatastyp) wird auf einem Mischwalzwerk bei 50°C und mit 2 g des nach Beispiel 1a erhaltenen Pigments eingefärbt und dann 12 Minuten bei 140°C vulkanisiert. Man erhält ein rotstichiggelbgefärbtes Vulkanisat sehr guter Lichtechtheit.

Beispiel 68

100 g einer 20%igen wäßrigen Paste des Pigments nach Beispiel 1a, beispielsweise hergestellt durch Auflösen des Farbstoffes in 96%iger Schwefelsäure, Austragen auf Eis, Filtrieren und Neutralwaschen mit Wasser, werden 22,5 l einer wäßrigen, ungefähr 9%igen Viskoselösung im Rührwerk zugesetzt. Die gefärbte Masse wird 15 Minuten gerührt, anschließend entlüftet und einem Spinn- und Entschwefelungsprozeß unterworfen. Man erhält rotstichiggelbe Fäden oder Folien mit sehr guter Lichtechtheit.

Beispiel 69

10 kg einer Papiermasse, enthaltend auf 100 g 4 g Cellulose, werden im Holländer während etwa 2 Stunden behandelt. Während dieser Zeit gibt man in je viertelstündigen Abständen 4 g Harzleim, dann 30 g einer etwa 15%igen Pigmentdispersion, erhalten durch Mahlen von 4,8 g des nach Beispiel 1a erhaltenen Pigments mit 4,8 g Dinaphthylmethandisulfonsäure und 22 g Wasser in der Kugelmühle, sodann 5 g Aluminiumsulfat zu.

Nach Fertigstellung auf der Papiermaschine erhält man ein rotstichiggelbgefärbtes Papier von hervorragender Lichtechtheit.

Beispiel 70

Das nach Beispiel 69 hergestellte gelb pigmentierte Papier wird mit der 55%igen Lösung eines Harnstoff-Formaldehyd-Harzes in n-Butanol getränkt und bei 140°C eingebrannt. Man erhält ein rotstichiggelbes Laminatpapier von sehr guter Migrations- und hervorragender Lichtechtheit.

Ein Laminatpapier gleicher Echtheit erhält man durch Laminieren eines Papieres, das im Tiefdruckverfahren mit einer Druckfarbe bedruckt wurde, die den in Beispiel 57 angegebenen, gelben Pigmentfeinteig und wasserlösliche bzw. verseifbare Bindemittel enthält.

Beispiel 71

20 g des gemäß Beispiel 1a erhaltenen Pigments werden in 50 g Dimethylformamid unter Verwendung eines Dispergierhilfsmittels, bestehend aus 50 g einer 10%igen Lösung von Polyacrylnitril in Dimethylformamid, in einer Perlmühle fein dispergiert. Das so erhaltene Pigmentkonzentrat wird in bekannter Weise zu einer Spinnlösung von Polyacrylnitril gegeben, homogenisiert und dann zu Filamenten nach bekannten Trocken- oder Naß-Spinnverfahren versponnen.

Man erhält rotstichiggelbgefärbte Filamente, deren Färbungen sich durch sehr gute Reib-, Wasch-, Migrations-, Hitze-, Licht- und Wetterechtheit auszeichnen.

**Patentansprüche**

1. Anthrachinon-Azomethin-Verbindungen der Formel

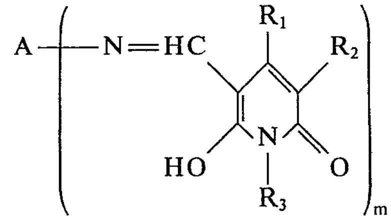

(I)

oder der tautomeren Formel

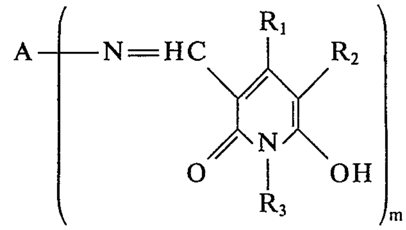

(I a)

oder der tautomeren Formel

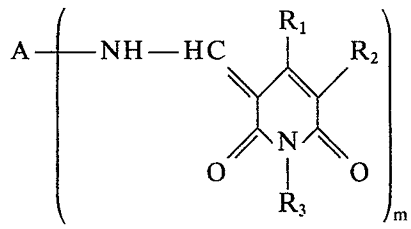

(I b)

in denen

A einen Sulfonsäuregruppen-freien, gegebenenfalls weitersubstituierten Anthrachinonrest, der vorzugsweise aus höchstens 5 kondensierten Ringen besteht,

$R_1$ Wasserstoff, $C_1-C_4$-Alkyl, Hydroxy-$C_1-C_4$-Alkyl, gegebenenfalls substituiertes Phenyl, Carboxy, Carbonsäure-$C_1-C_4$-alkylester oder Hydroxy,

$R_2$ Wasserstoff, Halogen, Nitro, Cyan, gegebenenfalls substituiertes Carbamoyl oder gegebenenfalls substituiertes Sulfamoyl, Sulfonsäure-$C_1-C_4$-alkylester, Sulfonsäurearylester, $C_1-C_4$-Alkylcarbonyl, $C_1-C_4$-Alkoxycarbonyl, gegebenenfalls substituiertes Benzoyl, Alkyl oder gegebenenfalls substituiertes Phenylsulfon oder einen heteroaromatischen Rest, z. B. einen Rest der Formel

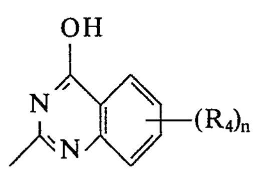

(II)

oder der Formel

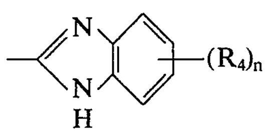

(III)

oder der Formel

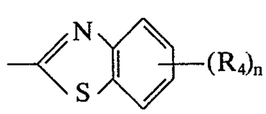

(IV)

$R_3$ gegebenenfalls substituiertes Aryl oder Heteroaryl, Cycloalkyl oder $C_1-C_{12}$-Alkyl, wobei die Alkylkette durch Sauerstoff oder Schwefel unterbrochen und/oder durch Hydroxyl-, $N(R')_2$- oder $-N(R')_3^{\oplus}X^{\ominus}$-Gruppen substituiert sein kann,
$R_4$ einen Substituenten,
R' Wasserstoff, $C_1-C_4$-Alkyl, Cycloalkyl, gegebenenfalls substituiertes Aryl,
X ein Anion,
m 1,2,3 oder 4 und
n 0, 1, 2, 3, oder 4 bedeuten.

2. Anthrachinon-Azomethin-Verbindungen, die in einer ihrer tautomeren Strukturen der Formel

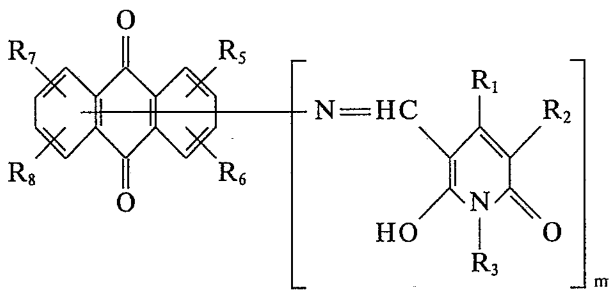

(VI)

entsprechen, worin

$R_1$, $R_2$, $R_3$ und m die oben angegebene Bedeutung haben und
$R_5$ Wasserstoff, Halogen wie Fluor, Chlor und Brom, Nitro, $C_1-C_4$-Alkyl, $C_1-C_4$-Alkoxy, $C_1-C_4$-Alkylamino, Benzylamino, Cyclohexylamino, $C_1-C_4$-Alkylmercapto, gegebenenfalls durch $C_1-C_4$-Alkyl, $C_1-C_4$-Alkoxy, Fluor, Chlor, Brom oder Nitro substituiertes Phenylmercapto, $C_1-C_4$-Alkylcarbonyl, $C_1-C_4$-Alkoxycarbonyl, gegebenenfalls durch $C_1-C_4$-Alkyl, $C_1-C_4$-Alkoxy, Chlor oder Nitro substituiertes Phenylamino, gegebenenfalls durch $C_1-C_4$-Alkyl, Benzyl oder Phenyl mono- oder disubstituiertes Carbamoyl, wobei Phenyl durch $C_1-C_4$-Alkyl, $C_1-C_4$-Alkoxy, Fluor, Chlor, Brom oder Nitro substituiert sein kann, Carboxy, Hydroxy, $C_1-C_4$-Alkylcarbonylamino, gegebenenfalls durch $C_1-C_4$-Alkyl, $C_1-C_4$-Alkoxy, Chlor, Brom oder Nitro substituiertes Benzoylamino oder ggf. durch $C_1-C_4$-Alkyl, $C_1-C_4$-Alkoxy, Fluor, Chlor, Brom oder Nitro substituiertes Benzolsulfonylamino,
$R_6$ Wasserstoff, Chlor, Hydroxy oder Methyl,
$R_7$ Wasserstoff, Halogen wie Fluor, Chlor oder Brom, Nitro, $C_1-C_4$-Alkyl, $C_1-C_4$-Alkoxy, $C_1-C_4$-Alkylamino, $C_1-C_4$-Alkylmercapto, gegebenenfalls durch $C_1-C_4$-Alkyl, $C_1-C_4$-Alkoxy, Fluor, Chlor, Brom oder Nitro substituiertes Phenylmercapto, $C_1-C_4$-Alkoxycarbonyl, $C_1-C_4$-Alkylcarbonyl, Benzylamino, Cyclohexylamino, gegebenenfalls durch $C_1-C_4$-Alkyl, $C_1-C_4$-Alkoxy, Chlor, Brom, oder Nitro substituiertes Phenylamino, Carboxy, Hydroxy, gegebenenfalls durch $C_1-C_4$-Alkyl, Benzyl oder Phenyl mono- oder disubstituiertes Carbamoyl, wobei Phenyl durch $C_1-C_4$-Alkyl, $C_1-C_4$-Alkoxy, Fluor, Chlor, Brom oder Nitro substituiert sein kann, $C_1-C_4$-Alkylcarbonylamino, gegebenenfalls durch $C_1-C_4$-Alkyl, $C_1-C_4$-Alkoxy, Chlor, Brom oder Nitro substituiertes Benzoylamino, $C_1-C_4$-Alkansulfonylamino oder gegebenenfalls durch $C_1-C_4$-Alkyl, $C_1-C_4$-Alkoxy, Fluor, Chlor, Brom oder Nitro substituiertes Benzolsulfonylamino und
$R_8$ Wasserstoff, Halogen wie Fluor, Chlor und Brom oder Hydroxy bedeuten.

3. Anthrachinon-Azomethin-Verbindungen, die in einer ihrer tautomeren Strukturen der Formel

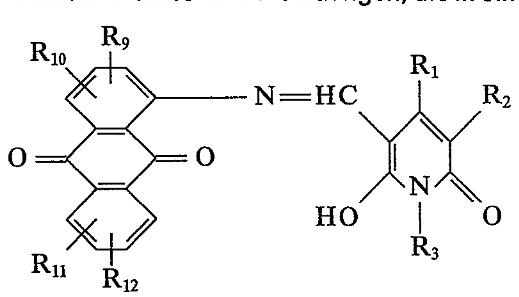

(VII)

entsprechen, worin

$R_1$, $R_2$ und $R_3$ die oben angegebene Bedeutung haben und

$R_9$, $R_{10}$, $R_{11}$ und $R_{12}$ Wasserstoff, Chlor, Brom, Carboxy, $C_1-C_4$-Alkoxycarbonyl, Carbamoyl, $C_1-C_4$-Alkylcarbonylamino, gegebenenfalls durch 1 oder 2 Nitro oder 1 bis 5 Chlor oder Brom substituiertes Benzoylamino, $C_1-C_4$-Alkansulfonylamino oder gegebenenfalls durch Methyl, Methoxy oder Chlor substituiertes Benzolsulfonylamino oder einen Rest der Formel

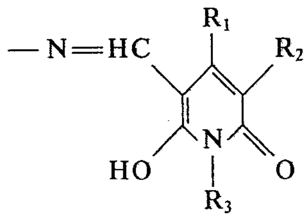

(VIII)

bedeuten.

4. Verfahren zur Herstellung von Anthrachinon-Azomethin-Verbindungen, dadurch gekennzeichnet, daß man Amino-anthrachinone der Formel

$$A\text{-}(NH_2)_m \qquad (V)$$

in der A und m die in Anspruch 1 genannte Bedeutung besitzen, mit 5-Alkoxymethylen-2,6-pyridionen der Formel

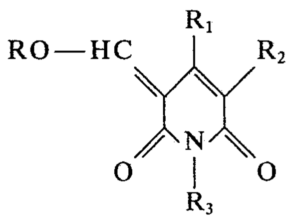

(XI)

in der R vorzugsweise für eine $C_1-C_4$-Alkylgruppe steht und $R_1$, $R_2$ und $R_3$ die in Anspruch 1 genannte Bedeutung besitzen, in einem organischen Reaktionsmedium bei 100–220° C, vorzugsweise 120–180° C kondensiert.

5. Verfahren zur Herstellung von Anthrachinon-Azomethin-Verbindungen, dadurch gekennzeichnet, daß man Formiminoester von Amino-anthrachinonen der Formel

$$A\text{-}(N{=}CH{-}OR)_m \qquad (XII)$$

in der A und m die in Anspruch 1 genannte Bedeutung besitzen und R vorzugsweise für eine $C_1-C_4$-Alkylgruppe steht, mit 6-Hydroxy-2-pyridonen der Formel

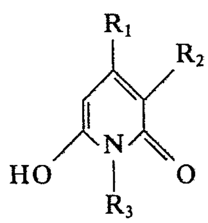

(IX)

in der $R_1$, $R_2$ und $R_3$ die in Anspruch 1 genannte Bedeutung besitzen, in einem organischen Reaktionsmedium bei 100–220° C, vorzugsweise 120–180° C, kondensiert.

6. Verfahren zur Herstellung von Anthrachinon-Azomethin-Verbindungen, dadurch gekennzeichnet, daß man Formamidiniumhalogenide der Formel

$$A-[NH-CH=\overset{\oplus}{N}(R)_2]_m \quad X^{\ominus} \qquad \text{(XIII)}$$

worin R vorzugsweise für eine $C_1-C_4$-Alkylgruppe und X für Chlor oder Brom steht, mit 6-Hydroxy-2-pyridonen der Formel

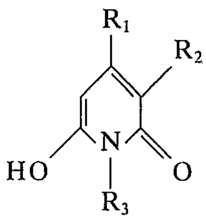

(IX)

in der $R_1$, $R_2$ und $R_3$ die in Anspruch 1 genannte Bedeutung besitzen, in einem organischen Reaktionsmedium bei 100–220° C, vorzugsweise 120–180° C, kondensiert.

7. Verfahren zum Pigmentieren organischer makromolekularer Stoffe, dadurch gekennzeichnet, daß man Anthrachinon-Pigmente gemäß den Ansprüchen 1–3 verwendet.

8. Verfahren zum Färben von synthetischen Fasermaterialien, dadurch gekennzeichnet, daß man Anthrachinon-Verbindungen gemäß den Ansprüchen 1–3 verwendet.

9. Mit den Anthrachinon-Verbindungen gemäß den Ansprüchen 1–3 pigmentierte oder gefärbte organische makromolekulare Stoffe.

## Claims

1. Anthraquinone-azomethine compounds of the formula

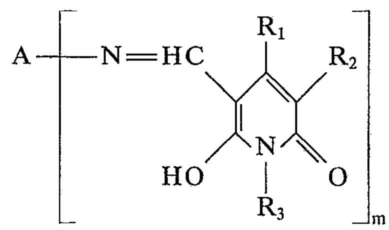

(I)

or of the tautomeric formula

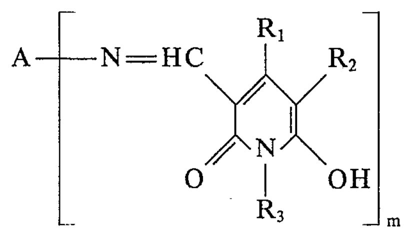

(I a)

or of the tautomeric formula

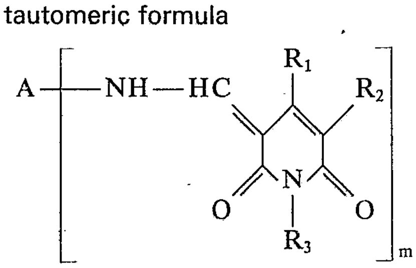

(I b)

in which

A denotes an anthraquinone radical which is free from sulphonic acid groups and optionally further substituted and which preferably consists of at most 5 fused rings,

$R_1$ denotes hydrogen, $C_1-C_4$-alkyl, hydroxy-$C_1-C_4$-alkyl, optionally substituted phenyl, carboxyl, carboxylic acid $C_1-C_4$-alkyl ester or hydroxyl,

$R_2$ denotes hydrogen, halogen, nitro, cyano, optionally substituted carbamoyl or optionally substituted sulphamoyl, sulphonic acid $C_1-C_4$-alkyl ester, sulphonic acid aryl ester, $C_1-C_4$-alkylcarbonyl, $C_1-C_4$-alkoxycarbonyl, optionally substituted benzoyl, alkyl or optionally substituted phenyl sulphone, or a hetero-aromatic radical, for example a radical of the formula

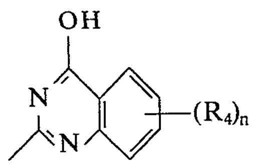
(II)

or of the formula

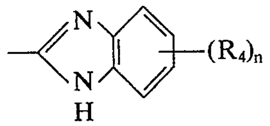
(III)

or of the formula

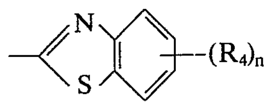
(IV)

$R_3$ denotes optionally substituted aryl or hetero-aryl, cycloalkyl or $C_1-C_{12}$-alkyl, it being possible for the alkyl chain to be interrupted by oxygen or sulphur and/or substituted by hydroxyl, $N(R_5)_2$- or $-N(R_5)_3^{\oplus}X^{\ominus}$ groups,

$R_4$ denotes a substituent,

R′ denotes hydrogen, $C_1-C_4$-alkyl, cycloalkyl or optionally substituted aryl,

X denotes an anion,

m denotes 1, 2, 3 or 4 and

n denotes 0, 1, 2, 3 or 4.

2. Anthraquinone-azomethine compounds which, in one of their tautomeric structures, correspond to the formula

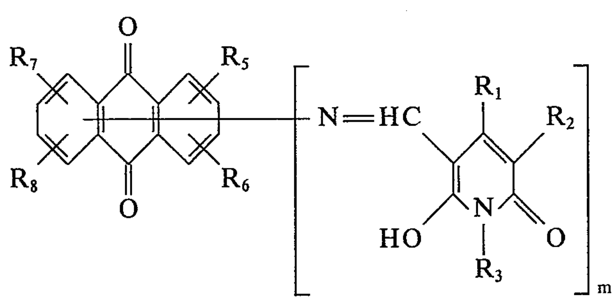
(VI)

wherein

$R_1$, $R_2$, $R_3$ and m have the abovementioned meaning, $R_5$ denotes hydrogen, halogen, such as fluorine, chlorine and bromine, nitro, $C_1-C_4$-alkyl, $C_1-C_4$-alkoxy, $C_1-C_4$ alkylamino, benzylamino, cyclohexylamino, $C_1-C_4$-alkylmercapto, phenylmercapto which is optionally substituted by $C_1-C_4$-alkyl, $C_1-C_4$-alkoxy, fluorine, chlorine, bromine or nitro, $C_1-C_4$-alkylcarbonyl, $C_1-C_4$-alkoxycarbonyl, phenylamino which is optionally substituted by $C_1-C_4$-alkyl, $C_1-C_4$-alkoxy, chlorine or nitro, carbamoyl which is optionally monosubstituted or disubstituted by $C_1-C_4$-alkyl, benzyl or phenyl, it being possible for phenyl to be substituted by $C_1-C_4$-alkyl, $C_1-C_4$-alkoxy, fluorine, chlorine, bromine or nitro, carboxyl, hydroxyl, $C_1-C_4$-alkylcarbonylamino, benzoylamino which is optionally substituted by $C_1-C_4$-alkyl, $C_1-C_4$-alkoxy, chlorine, bromine or nitro, or benzenesulphonylamino which is optionally substituted by $C_1-C_4$-alkyl, $C_1-C_4$-alkoxy, fluorine, chlorine, bromine or nitro,

$R_6$ denotes hydrogen, chlorine, hydroxyl or methyl,

$R_7$ denotes hydrogen, halogen, such as fluorine, chlorine or bromine, nitro, $C_1-C_4$-alkyl, $C_1-C_4$-alkoxy, $C_1-C_4$-alkylamino, $C_1-C_4$-alkylmercapto, phenylmercapto which is optionally substituted by $C_1-C_4$-alkyl, $C_1-C_4$-alkoxy, fluorine, chlorine, bromine or nitro, $C_1-C_4$-alkoxycarbonyl, $C_1-C_4$-alkylcarbonyl, benzylamino, cyclohexylamino, phenylamino which is optionally substituted by

$C_1-C_4$-alkyl, $C_1-C_4$-alkoxy, chlorine, bromine or nitro, carboxyl, hydroxyl, carbamoyl which is optionally monosubstituted or disubstituted by $C_1-C_4$-alkyl, benzyl or phenyl, it being possible for phenyl to be substituted by $C_1-C_4$-alkyl, $C_1-C_4$-alkoxy, fluorine, chlorine, bromine or nitro, $C_1-C_4$-alkylcarbonylamino, benzoylamino which is optionally substituted by $C_1-C_4$-alkyl, $C_1-C_4$-alkoxy, chlorine, bromine or nitro, $C_1-C_4$-alkanesulphonylamino, or benzenesulphonylamino which is optionally substituted by $C_1-C_4$-alkyl, $C_1-C_4$-alkoxy, fluorine, chlorine, bromine or nitro and
$R_8$ denotes hydrogen, halogen, such as fluorine, chlorine and bromine, or hydroxyl.

3. Anthraquinone-azomethine compounds which, in one of their tautomeric structures, correspond to the formula

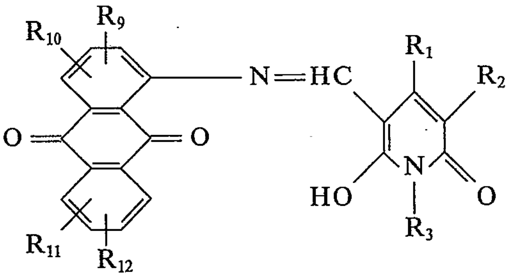

(VII)

wherein
$R_1$, $R_2$ and $R_3$ have the abovementioned meaning and
$R_9$, $R_{10}$, $R_{11}$ and $R_{12}$ denote hydrogen, chlorine, bromine, carboxyl, $C_1-C_4$-alkoxycarbonyl, carbamoyl, $C_1-C_4$-alkylcarbonylamino, benzoylamino which is optionally substituted by 1 or 2 nitro groups or 1 to 5 chlorine or bromine atoms, $C_1-C_4$-alkanesulphonylamin, benzenesulphonylamino which is optionally substituted by methyl, methoxy or chlorine, or a radical of the formula

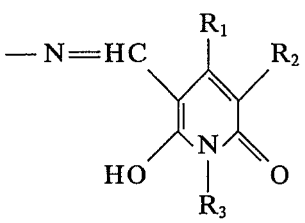

(VIII)

4. Process for the preparation of anthraquinoneazomethine compounds, characterised in that aminoanthraquinones of the formula

$$A-(NH_2)_m \qquad (V)$$

in which
A and m have the meaning given in Claim 1, ar subjected to a condensation reaction with 5-alkoxy-methylene-2,6-pyridiones of the formula

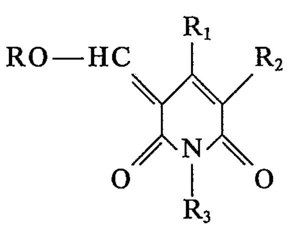

(XI)

in which
R preferably represents a $C_1-C_4$-alkyl group and
$R_1$, $R_2$ and $R_3$ have the meaning given in claim 1, at 100–220°C, preferably 120–180°C, in an organic reaction medium.

5. Process for the preparation of anthraquinoneazomethine compounds, chracterised in that formiminoesters of amino-anthraquinones, of the formula

$$A-(N=CH-OR)_m \qquad (XII)$$

in which
A and m have the meaning given in claim 1 and
R preferably represents a $C_1-C_4$-alkyl group, are subjected to a condensation reaction with 6-hydroxy-2-pyridones of the formula

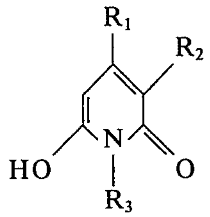

(IX)

in which
$R_1$, $R_2$ and $R_3$ have the meaning given in claim 1, at 100–220°C, preferably 120–180°C, in an organic reaction medium.

6. Process for the preparation of anthraquinone-azomethine compounds, characterised in that formamidines of amino-anthraquinones, of the formula

$$A-[N=CH-N(R)_2]_m \qquad (XXXIV)$$

in which
A and m have the meaning given in claim 1 and
R preferably represents a $C_1-C_4$-alkyl group, are subjected to a condensation reaction with 6-hydroxy-2-pyridones of the formula

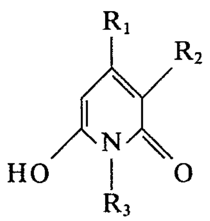

(IX)

in which
$R_1$, $R_2$ and $R_3$ have the meaning given in claim 1, at 100–220°C, preferably 120–180°C, in an organic reaction medium.

7. Process for pigmenting organic macromolecular substances, characterised in that anthraquinone pigments according to claims 1–3 are used.

8. Process for dyeing synthetic fibre materials, characterised in that anthraquinone compounds according to claims 1–3 are used.

9. Organic macromolecular substances pigmented or dyed with the anthraquinone compounds according to claims 1–3.

**Revendications**

1. Composés antraquinone-azométhiniques de formule:

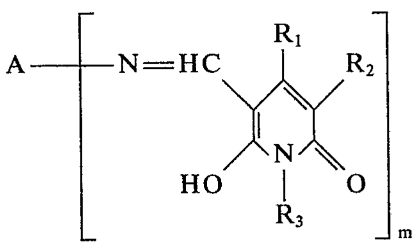

(I)

ou de formule tautomère

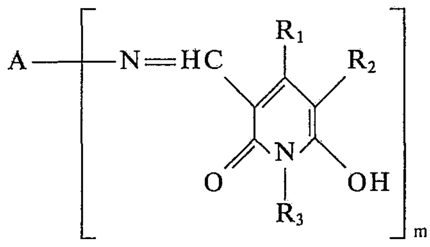

(Ia)

ou de formule tautomère

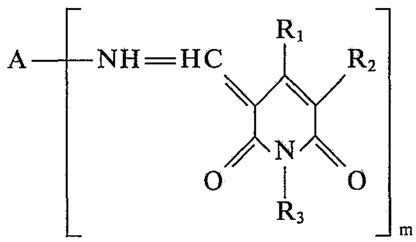

(Ib)

dans lesquelles:

A est un radical anthraquinone, éventuellement encore substitué, ne comportant pas de groupe acide sulfonique et qui consiste de préférence en au maximum 5 noyaux condensés,

$R_1$ est un atome d'hydrogène, un groupe alkyle en $C_1-C_4$, hydroxyalkyle en $C_1-C_4$, phényle éventuellement substitué, carboxy, carboxylate d'alkyle en $C_1-C_4$, ou hydroxyle;

$R_2$ est un atome d'hydrogène ou d'halogène ou un groupe nitro, cyano, carbamoyle éventuellement substitué ou sulfamoyle éventuellement substitué, sulfonate d'alkyle en $C_1-C_4$, sulfonate d'aryle, alkylcarbonyle en $C_1-C_4$, alcoxycarbonyle en $C_1-C_4$, benzoyle éventuellement substitué, alkyle ou phénylsulfone éventuellement substitué ou un radical hétéroaromatique, par exemple un radical de formule:

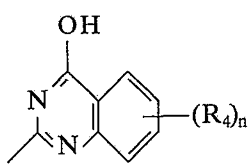

(II)

ou de formule

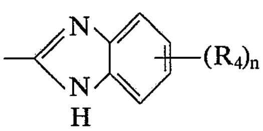

(III)

ou de formule

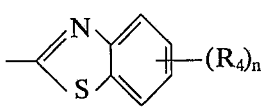

(IV)

$R_3$ est un radical aryle ou hétéroaryle éventuellement substitué, cycloalkyle ou alkyle en $C_1-C_{12}$, la chaîne alkyle pouvant être interrompue par de l'oxygène ou du soufre et/ou substituée par des groupes hydroxyle, $N(R')_2$ ou $-N(R')_3^{\oplus}X^{\ominus}$;

$R_4$ est un substituant;

R' est un atome d'hydrogène, un groupe alkyle en $C_1-C_4$, cycloalkyle, aryle éventuellement substitué;

X est un anion;

m vaut 1, 2, 3 ou 4; et

n vaut 0, 1, 2, 3 ou 4.

2. Composés anthraquinone-azométhiniques qui, sous une de leurs structures tautomères, répondent à la formule:

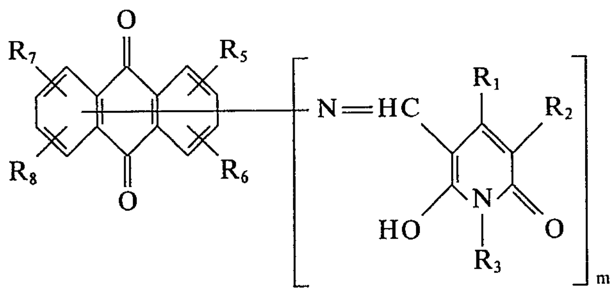

(VI)

dans laquelle

$R_1$, $R_2$, $R_3$ et m ont le sens indiqué ci-dessus; et

$R_5$ est un atome d'hydrogène ou d'halogène comme le fluor, le chlore et le brome, un groupe nitro, alkyle en $C_1-C_4$; alcoxy en $C_1-C_4$, alkylamino en $C_1-C_4$, benzylamino, cyclohexylamino, alkylmercapto en $C_1-C_4$, phénylmercapto (éventuellement substitué par un groupe alkyle en $C_1-C_4$, alcoxy en $C_1-C_4$, par du fluor, du chlore, du brome ou un groupe nitro), alkylcarbonyle en $C_1-C_4$, alcoxycarbonyle en $C_1-C_4$, phénylamino (éventuellement substitué par un groupe alkyle en $C_1-C_4$, alcoxy en $C_1-C_4$, du chlore ou un groupe nitro), carbamoyle (éventuellement mono- ou di-substitué par un groupe alkyle en $C_1-C_4$, benzyle ou phényle, le groupe phényle pouvant être substitué par un groupe alkyle en $C_1-C_4$, alcoxy en $C_1-C_4$, par du fluor, du chlore, du brome ou un groupe nitro), carboxy, hydroxyle, alkylcarbonylamino en $C_1-C_4$, benzoylamino (éventuellement substitué par un groupe alkyle en $C_1-C_4$, alcoxy en $C_1-C_4$, par du chlore, du brome ou un groupe nitro) ou benzènesulfonylamino (éventuellement substitué par un groupe alkyle en $C_1-C_4$, alcoxy en $C_1-C_4$, par du fluor, du chlore ou du brome ou par un groupe nitro);

$R_6$ est un atome d'hydrogène ou de chlore ou un groupe hydroxyle ou méthyle;

$R_7$ est un atome d'hydrogène ou d'halogène comme le fluor, le chlore ou le brome, un groupe nitro, alkyle en $C_1-C_4$, alcoxy en $C_1-C_4$, alkylamino en $C_1-C_4$, alkylmercapto en $C_1-C_4$, phénylmercapto (éventuellement substitué par un groupe alkyle en $C_1-C_4$, alcoxy en $C_1-C_4$, par du fluor, du chlore ou du brome ou par un groupe nitro), alcoxycarbonyl en $C_1-C_4$, alkylcarbonyle en $C_1-C_4$, benzylamino, cyclohexylamino, phénylamino (éventuellement substitué par un groupe alkyle en $C_1-C_4$, alcoxy en $C_1-C_4$, par du chlore, du brome ou un groupe nitro), carboxyle, hydroxyle, carbamoyle (éventuellement mono- ou di-substitué par un groupe alkyle en $C_1-C_4$, benzyle ou phényle, le groupe phényle pouvant être éventuellement substitué par un groupe alkyle en $C_1-C_4$, alcoxy en $C_1-C_4$, par du fluor, du chlore ou du brome ou un groupe nitro), alkylcarbonylamino en $C_1-C_4$, benzoylamino (éventuellement substitué par un groupe alkyle en $C_1-C_4$, alcoxy en $C_1-C_4$, par du chlore, du brome ou un groupe nitro), alcanesulfonylamino en $C_1-C_4$ ou benzènesulfonylamino (éventuellement substitué par un groupe alkyle en $C_1-C_4$; alcoxy en $C_1-C_4$, par du fluor, du chlore ou du brome ou un groupe nitro) et

$R_8$ est un atome d'hydrogène ou d'halogène comme le fluor, le chlore et le brome ou un groupe hydroxyle.

3. Composés anthraquinone-azométhiniques, qui sous une de leurs structures tautomères, répondent à la formule

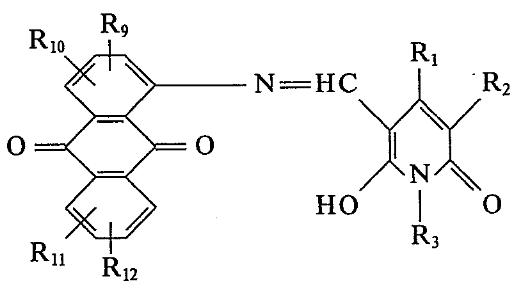

(VII)

où $R_1$, $R_2$ et $R_3$ ont le sens indiqué ci-dessus; et

$R_9$, $R_{10}$, $R_{11}$ et $R_{12}$ sont un atome d'hydrogène, de chlore ou de brome, un groupe carboxyle, alcoxycarbonyle en $C_1-C_4$, carbamoyle, alkylcarbonylamino en $C_1-C_4$, benzoylamino (éventuellement substitué par 1 ou 2 groupes nitro ou par 1 à 5 atomes de chlore ou de brome), alcanesulfonylamino en $C_1-C_4$ ou benzènesulfonylamino (éventuellement substitué par un groupe méthyle ou méthoxy ou un atome de chlore) ou un radical de formule

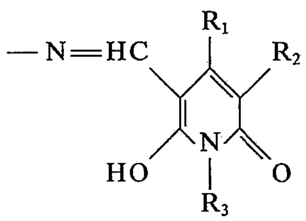

(VIII)

4. Procédé pour produire des composés anthraquinone-azométhininiques, caractérisé en ce qu'on condense des aminoanthraquilnones de formule:

$$A-(NH_2)_m \quad (V)$$

(dans laquelle A et m ont le sens indiqué à la revendication 1) avec des 5-alcoxyméthylène-2,6-pyridiones de formule

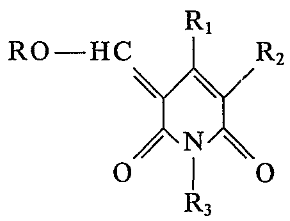

(XI)

dans laquelle R représente de préférence un groupe alkyle en $C_1-C_4$, et $R_1$, $R_2$ et $R_3$ ont le sens indiqué à la revendication 1, dans un milieu organique de réaction à 100–220° C, de préférence 120 à 180° C.

5. Procédé pour produire des composés anthraquinone-azométhiniques, caractérisé en ce qu'on condense des formiminoesters d'aminoanthraquiononones de formule

$$A-(N{=}CH-OR)_m \quad (XII)$$

(dans laquelle A et m ont le sens indiqué à la revendication 1, et R est de préférence un groupe alkyle en $C_1-C_4$) avec des 6-hydroxy-2-pyridones de formule:

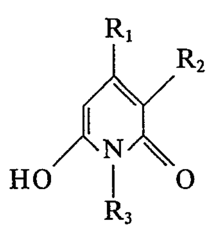

(IX)

dans laquelle $R_1$, $R_2$ et $R_3$ ont le sens indiqué à la revendication 1 dans un milieu organique de réaction à 100–220° C, de préférence 120 à 180° C.

6. Procédé pour produire des composés anthraquinone-azéométhiniques, caractérisé en ce qu'on condense des formamidines d'aminoanthraquinones de formule

$$A-[N{=}CH-N(R)_2]_m \quad (XXXIV)$$

(dans laquelle A et m ont le sens indiqué à la revendication 1, et R est de préférence un groupe alkyle en $C_1-C_4$) avec des 6-hydroxy-2-pyridones de formule:

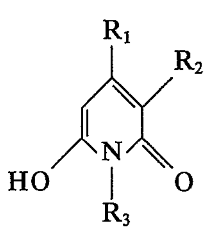

(IX)

(dans laquelle $R_1$, $R_2$ et $R_3$ ont le sens indiqué à la revendication 1) dans un milieu organique de réaction à 100–220° C, de préférence 120 à 180° C.

7. Procédé pour pigmenter des substances macrompléculaires organiques, caractérisé en ce qu'on utilise des pigments anthraquinoniques selon les revendications 1 à 3.

8. Procédé pour teindre des matières en fibres synthétiques, caractérisé en ce qu'on utilise des colorants anthraquinoniques selon les revendications 1 à 3.

9. Substances macromoléculaires organiques pigmentées ou teintes à l'aide de composés anthraquinoniques selon les revendications 1à 3.